# EUROPÄISCHE PATENTANMELDUNG

(11) **EP 4 083 784 A1**
(43) Veröffentlichungstag der Anmeldung: **02.11.2022**
(21) Anmeldenummer: 21212984.5
(22) Anmeldetag: 07.12.2021
(51) Int. Cl.: G06F 8/20

(54) **VERFAHREN, SYSTEM UND COMPUTERPROGRAMM ZUM ENTWICKELN, ABSICHERN, TRAINIEREN UND/ODER BETREIBEN EINES FAHRZEUGSYSTEMS ODER EINER FAHRZEUGFUNKTIONALITÄT**

(30) Priorität: 27.04.2021 DE 102021110810; 27.04.2021 DE 102021110812
(71) Anmelder: Bayerische Motoren Werke Aktiengesellschaft, 80809 München (DE)
(72) Erfinder: Augst, Alexander, 80937 Muenchen (DE)

(57) **Zusammenfassung**

Die Erfindung betrifft ein Verfahren, ein System sowie ein Computerprogramm zum Entwickeln, Absichern, Trainieren und/oder Betreiben eines Fahrzeugsystems oder einer Fahrzeugfunktionalität. Das Verfahren umfasst ein Erzeugen (S1, S2) von Datenabschnitten (DA2(V1), DA2(V2), DA2(V3)) repräsentierend ein oder mehrere virtuelle Objekte (V01, VO1(V1), VO1(V2), VO1(V3)), die jeweils stellvertretend sind für eine oder mehrere bewegliche und/oder veränderliche Gegebenheiten; sowie (daraufhin) ein Verarbeiten (S3, S4) der Datenabschnitte (DA2(V1), DA2(V2), DA2(V3)) repräsentierend das eine oder die mehreren virtuellen Objekte (VO1, VO1(V1), VO1(V2), VO1(V3)) oder abhängig von den Datenabschnitten (DA2(V1), DA2(V2), DA2(V3)) ermittelter Daten (RD(V1), RD(V2) zum Entwickeln, Absichern und/oder Trainieren eines Entwicklungsstandes (ES1, ES2) des Fahrzeugsystems oder der Fahrzeugfunktionalität.

## Beschreibung

Die Erfindung betrifft ein Verfahren, ein System sowie ein korrespondierendes Computerprogramm zum Entwickeln, Absichern, Trainieren und/oder Betreiben eines Fahrzeugsystems (darunter soll auch das Entwickeln, Absichern und/oder Betreiben eines Entwicklungsstands, wie z.B. eines Software-Entwicklungsstands, für ein Fahrzeug oder eines Fahrzeugs verstanden werden). Dies kann ein Betreiben einer entsprechenden Entwicklungsumgebung sowie einen entsprechenden Entwicklungsbetrieb, Testbetrieb bzw. Absicherungsbetrieb für Fahrzeuge auf Basis der Entwicklungsumgebung und/oder Entwicklungsstände umfassen. Ferner gehört zum Umfang der Erfindung auch ein Entwicklungsstand eines insbesondere zumindest teilweise automatisiert fahrbaren Fahrzeugs, welcher gemäß den Merkmalen der Erfindung entwickelt, abgesichert, trainiert und/oder betrieben wurde oder wird.

Bei der Entwicklung, insbesondere Absicherung moderner Fahrzeuge muss eine extrem große Vielzahl von diversen Situationen (z.B. Fahrsituationen), Zuständen mehrerer Systeme und Funktionalitäten der Fahrzeuge, sowie von Bedingungen, welchen Fahrzeuge bei ihrem späteren Betrieb ausgesetzt werden, berücksichtigt werden. Insbesondere muss ein Test und eine Absicherung der Algorithmen bzw. der Software zu jeder sogenannten Integrationsstufe wiederholt werden.

Daher können Aufwand, Kosten sowie Zeitbedarf für die entsprechende Entwicklung und Absicherung mit einer weiter steigenden Komplexität der Systeme und Funktionalitäten moderner Fahrzeuge extrem stark ansteigen. Dies ist besonders für die Entwicklung, Absicherung sowie die Markteinführung von zumindest teilweise automatisiert fahrbaren Fahrzeugen von entscheidender Bedeutung.

Insbesondere für die Entwicklung des automatisierten Fahrens ist die Berücksichtigung einer extrem großen Anzahl von in der Realität vorkommenden bzw. möglichen Situationen, insbesondere Fahrsituationen, notwendig. Besonders mit der Erhöhung des gewünschten Automatisierungsgrads von zumindest teilweise automatisiert fahrbaren Fahrzeugen steigt die Anzahl von relevanten Fahrsituationen, wie z.B. Anordnungen und Konstellationen von Verkehrsteilnehmern, die von den Fahrzeugen zweckmäßig gehandhabt werden müssen, sehr stark (auch stark nichtlinear) an.

Nach dem Stand der Technik bzw. gemäß den rechtlichen Rahmenbedingungen zur sogenannten Homologation bzw. Markteinführung der Fahrzeuge resultiert daher eine enorme Fahrstrecke, die im Rahmen von Test und Absicherung derartiger Fahrzeuge überwiegend fehlerfrei bzw. mit einer jeweils zweckmäßigen Performance geleistet werden müsste. Dies muss jeweils zu mehreren sogenannten Integrationsstufen und (in jeweils festgelegtem Maße) nach der Fertigstellung eines jeden Entwicklungsstandes wiederholt werden.

Daher ist es die Aufgabe der vorliegenden Erfindung, ein verbessertes Verfahren, System sowie Computerprogramm zum Erzeugen virtueller Objekte, insbesondere auch zur Verwendung der virtuellen Objekte bzw. ihnen entsprechender Daten zur Entwicklung, zur Absicherung, zum Trainieren und/oder zum Betreiben eines Fahrzeugsystems aufzuzeigen. Insbesondere bezieht sich die Aufgabe der Erfindung auf ein zumindest teilweise automatisiert fahrbares (auch zu verstehen als parkendes und/oder rangierendes) Fahrzeug. Ferner kann zur Aufgabe der Erfindung eine Verwendung (auch zu verstehen als ein Betreiben) einer stationären (z.B. von einem realen bzw. physikalischen Fahrzeug zumindest teilweise losgelösten) Entwicklungsumgebung gehören. Dies ist insbesondere auch zu verstehen als eine Verwendung des vorgeschlagenen Verfahrens, Systems bzw. Computerprogramms im Rahmen eines entsprechenden Entwicklungsbetriebs, insbesondere zum Trainieren bzw. Absichern eines Fahrzeugsystems mittels einer solchen Entwicklungsumgebung.

Die Aufgabe der Erfindung wird durch die Merkmale jedes der unabhängigen Patentansprüche gelöst. Vorteilhafte Ausführungsformen sind in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Ein erster Aspekt der Erfindung betrifft ein Verfahren zur Entwicklung, zur Absicherung, zum Trainieren und/oder zum Betreiben eines Entwicklungsstandes eines Fahrzeugsystems oder einer Fahrzeugfunktionalität. Das Verfahren umfasst: Erzeugen von Datenabschnitten repräsentierend ein oder mehrere virtuelle Objekte, die jeweils stellvertretend sind für eine oder mehrere bewegliche und/oder veränderliche Gegebenheiten; und, (daraufhin, darauffolgend, in einem weiteren Zeitintervall): Verarbeiten der Datenabschnitte repräsentierend das eine oder die mehreren virtuellen Objekte oder abhängig von den Datenabschnitten ermittelter Daten zum Entwickeln, Absichern und/oder Trainieren eines Entwicklungsstandes des Fahrzeugsystems oder der Fahrzeugfunktionalität.

Das eine oder die mehreren virtuellen Objekte können bevorzugt bewegliche, bewegbare und/oder veränderliche Objekte, insbesondere Verkehrsteilnehmer, sein.

Beispielsweise kann zumindest ein virtuelles Objekt (muss aber nicht) einem bestimmten realen Objekt, z.B. einem Verkehrsteilnehmer einer bestimmten Klasse, wie z.B. Fußgänger, Radfahrer, Motorradfahrer, Rollerfahrer, Kind, Tier (Katze, Hund, Pferd, Schaf, Kuh, Straus, Känguru, etc.), hinsichtlich einer Eigenschaft nachempfunden sein bzw. die Eigenschaft, insbesondere dynamisch simulieren. Alternativ oder zusätzlich kann das zumindest eine virtuelle Objekt einem Objekt hinsichtlich einer Eigenschaft nachempfunden sein bzw. die Eigenschaft, insbesondere dynamisch simulieren, welches real sein könnte.

Beispielsweise kann im Rahmen des Verfahrens zumindest ein virtuelles Objekt erzeugt werden, das einem oder mehreren in der Realität vorkommenden Merkmalen entspricht oder solchen zumindest nicht widerspricht. Dabei können das eine oder die mehreren Merkmale von einem konkreten Objekt bzw. von einem realen bzw. z.B. in der Realität beobachtbaren oder beobachteten Objekt abstrahiert sein.

In einem weiteren Beispiel kann das zumindest eine virtuelle Objekt eine Kombination von Merkmalen von zumindest zwei realen Objekten oder Objekten, die real sein könnten, aufweisen. In diesem Sinne kann das zumindest eine virtuelle Objekt z.B. ein Wolpertinger sein.

In einem weiteren Beispiel kann das virtuelle Objekt erzeugt werden gemäß einer Kombination aus Merkmalen eines Fußgängers (z.B. die Erkennungsmerkmale eines Fußgängers etwa für eine Sensorik des Fahrzeugs aufweisen) und zudem Merkmale aufweisen, die hinsichtlich der Bewegung einem Fahrradfahrer, einem Skateboardfahrer oder einem Rollerbladefahrer nachempfunden sind. Die Nutzung eines solchen virtuellen Objekts (gemäß einem oder mehreren nachstehend beschriebenen Merkmalen) kann es z.B. erlauben, Datenabschnitte betreffend Objekte, die in einem realen Straßenverkehr (z.B. bei einem späteren Betrieb eines Fahrzeugs) möglicherweise oder gar relativ wahrscheinlich auftreten werden, zu erzeugen. Das Beispiel illustriert die Möglichkeit, ein Fahrzeug auf eine Begegnung mit einer (gewünschten, fast beliebigen) Anzahl von virtuellen Objekten vorzubereiten, die in einer realistisch leistbaren Erprobung der Fahrzeuge (ggf. auch rein mathematisch) nicht ausführbar wäre.

Ein virtuelles Objekt kann ein bestimmtes bzw. ihm zugeordnetes Verhalten und/oder eine bestimme Reaktionsfähigkeit auf andere (reale und/oder virtuelle) Objekte aufweisen.

Beispielsweise kann das virtuelle Objekt ausgestaltet sein, sich auf eine bestimmte Art und Weise zu bewegen, zu verhalten, zu agieren und/oder zu reagieren. Es können bestimmte, müssen aber nicht bzw. müssen nicht alle Bewegungen, Aktionen und/oder Reaktionen des Objekts vorausbestimmt (bzw. einprogrammiert) sein. Vielmehr können eine Eigenschaft und/oder ein bestimmtes Verhalten des Objekts (z.B. in Bezug auf die virtuelle Umgebung) vorgegeben sein. Dies kann erfolgen, ohne dass bestimmte Bewegungen oder Aktionen vorgegeben bzw. vorgesehen werden (müssen).

Insbesondere kann zumindest ein virtuelles Objekt erzeugt werden (d.h. in Form entsprechender Daten erscheinen bzw. aktiviert werden) und/oder ein oder mehrere Parameter des virtuellen Objekts variiert werden, um eine bestimmte Anordnung und/oder Situation mit Beteiligung virtueller Objekte, z.B. eine Fahrsituation, z.B. eine mit einem bestimmten Muster von Parametern gekennzeichnete Fahrsituation, in der virtuellen Umgebung zu erzeugen.

Alternativ oder zusätzlich kann ein virtuelles Objekt gültig werden (d.h. in Form entsprechender Daten erscheinen bzw. aktiviert werden) und/oder ein oder mehrere Parameter des virtuellen Objekts variiert werden, wenn eine Situation, z.B. eine mit einem bestimmten Muster von Parametern gekennzeichnete Situation, wie z.B. eine Fahrsituation, in der virtuellen Umgebung erzeugt bzw. simuliert wird.

Der eine oder die mehreren Parameter des virtuellen Objekts können z.B. kennzeichnend sein für einen oder mehrere Einträge aus der folgenden Auflistung:
- seine aktuelle Eigenschaft und/oder sein aktuelles Verhalten;
- seine Position, seine Abmessungen, und/oder seine Bewegung;
- seine Wahrnehmung (z.B. für einen von dem Objekt einsehbarer Raumbereich und/oder für das, was das Objekt aus seiner Perspektive wahrnehmen kann);
- eine Aktion und/oder Einwirkung des virtuellen Objekts gegenüber dem Fahrzeug bzw. auf das Fahrzeug und/oder gegenüber einem weiteren realen Objekt bzw. auf das weitere reale Objekt;
- eine Aktion des Fahrzeugs und/oder eines weiteren realen Objekts mit Bezug auf das virtuelle Objekt;
- eine Einwirkung eines weiteren realen Objekts und/oder des Fahrzeugs auf das virtuelle Objekt.

Insbesondere umfasst das Verfahren eine zumindest teilweise voneinander unabhängige Veränderung bzw. Veränderbarkeit, Steuerbarkeit unterschiedlicher Parameter des zumindest eines virtuellen Objekts voneinander. Beispielsweise beschreibt die obige Auflistung derartige, unterschiedliche Arten der Parameter des zumindest eines virtuellen Objekts. Bevorzugt können aber bestimmte Abhängigkeiten zwischen den Parameterwerten berücksichtigt werden.

Besonders bevorzugt können statistische Abhängigkeiten zwischen einem oder mehreren ersten Parametern und einem oder mehreren zweiten Parametern des zumindest eines virtuellen Objekts berücksichtigt werden.

Der eine oder die mehreren Datenabschnitte repräsentierend das eine oder die mehreren virtuellen Objekte können eine Abfolge (z.B. eine Sequenz) der Parameterwerte und/oder eine Information über die Veränderung oder Veränderbarkeit der Parameterwerte kennzeichnen.

In einem vereinfachten Beispiel kann ein Erzeugen der Datenabschnitte repräsentierend das eine oder die mehreren virtuellen Objekte erfolgen, indem ein Abruf und/oder ein Abspielen von (z.B. zumindest teilweise vorgespeicherten) Datenabschnitten repräsentierend das zumindest eine virtuelle Objekt, die z.B. das virtuelle Objekt einschließlich seiner Bewegung und/oder seines Verhaltens repräsentieren, erfolgt.

Die Datenabschnitte repräsentierend das eine oder die mehreren virtuellen Objekte können Bilder (z.B. Kameradaten), Wärmebilder, Bildsequenzen, Punktewolken, sogenannte Radar-Objekte und/oder LIDAR-Objekte umfassen, die auch das reale Fahrzeug bei einem entsprechenden realen Objekt erfassen würde, oder ähnlich beschaffen sein, insbesondere etwa dieselben oder entsprechende Merkmale, wie z.B. Format und/oder Qualität, aufweisen wie Bilder (z.B. Kameradaten), Wärmebilder, Bildsequenzen, Punktewolken, sogenannte Radar-Objekte und/oder LIDAR-Objekte, die ein reales Fahrzeug (z.B. ein bestimmtes reales-Fahrzeug) erfasst. Die Datenabschnitte können die Daten eines realen Sensors des Fahrzeugs beim Auftreten eines mit dem virtuellen Objekt korrespondierenden realen Objekts imitieren bzw. modellhaft nachbilden.

Die Datenabschnitte repräsentierend das ein oder die mehreren virtuellen Objekte oder die abhängig von den Datenabschnitten ermittelten Daten sind insbesondere als Repräsentation einer zeitlichen Veränderung und/oder einer räumlichen Veränderung zu verstehen. Es können laufende Datenabschnitte bzw. Daten (etwa ein Datenstrom) sein.

Die Datenabschnitte repräsentierend das eine oder die mehreren virtuellen Objekte oder die abhängig von den Datenabschnitten ermittelten Daten können (z.B. als Eingangsdaten) für einen Entwicklungsstand des Fahrzeugsystems verwendet werden.

Die Datenabschnitte repräsentierend das eine oder die mehreren virtuellen Objekte und/oder die von den Datenabschnitten abhängigen Daten können in einem Backend (zu verstehen auch als Server, Cloud oder Rechenzentrum mit einer zentralen oder dezentralen Architektur) erzeugt werden.

Der Begriff "weitere Gegebenheit" kann jede weitere, von dem zumindest einen virtuellen Objekt unterschiedliche Gegebenheit, insbesondere ein weiteres Objekt sein. Die virtuelle Gegebenheit kann, z.B. ein Fahrzeug, ein Fußgänger oder ein Zweiradfahrer sein bzw. stellvertretend für ein solches geschaffen bzw. eingesetzt sein.

Das eine oder die mehreren virtuellen Objekte und/oder weitere Gegebenheiten können in einer virtuellen Umgebung, insbesondere einer auf Basis von Daten bestehenden oder existenten Umgebung erfolgen. Es kann sich um eine vollständig virtuelle, insbesondere (zumindest zunächst) nur auf Basis der Daten beschriebene und somit existierende Umgebung handeln. Diese kann ein z.B. lokales Koordinatensystem und/oder unbewegliche Gegebenheiten umfassen (d.h. durch Daten beschreiben).

Das zumindest eine virtuelle Objekt kann ein virtuell bewegliches Objekt und/oder ein Objekt mit einem virtuellen Verhalten und/oder ein Objekt mit einer virtuellen Veränderung sein. Bei der Bewegung und/oder dem Verhalten und/oder der Veränderung des zumindest einen virtuellen Objekts kann es sich im Rahmen dieses Dokuments (jeweils) um eine virtuelle Bewegung und/oder ein virtuelles Verhalten (des virtuellen Objekts) und/oder eine virtuelle Veränderung (des virtuellen Objekts) handeln.

Bevorzugt können die Bewegung und/oder die Veränderung und/oder das Verhalten Parameter aufweisen, die zumindest teilweise nach einer bestimmten Abhängigkeit (z.B. gemäß einem bestimmten mathematischen Zusammenhang, z.B. einer Logik, einer Formel, einer Funktion und/oder einem Muster) und/oder zumindest teilweise nach einem Zufallsprinzip bestimmt und/oder verändert werden. Beispielsweise kann das virtuelle Objekt eine Bewegung und/oder ein Manöver gemäß einer bestimmten Abhängigkeit, z.B. gemäß einem Muster, und/oder mit Parametern, die sich im Verlauf der Zeit gemäß einer Vorgabe, einem Kriterium, Zufall und/oder einem mathematischen Zusammenhang verändern, ausführen.

Ein Manöver kann z.B. ein Fahrmanöver, ein Parkmanöver oder ein Rangiermanöver sein oder umfassen. Ein Manöver kann z.B. durch ein bestimmtes Muster (z.B. ein Datenmuster, welches bestimmte Merkmale des Manövers, Proportionen zwischen seinen Parameter, etc. repräsentiert) gekennzeichnet sein. Dabei müssen mehrere virtuelle Objekte, die ein bestimmtes Manöver ausführen, nicht notwendigerweise dieselben Parameter aufweisen. Vielmehr können die Parameter kennzeichnend seine Bewegung, sein Verhalten, etc. gemäß einem Muster ermittelt werden. Vielmehr können die Parameter abhängig von Parametern der Umgebung und/oder von einer Veränderung der Parameter der Umgebung bestimmt oder angepasst werden. Mit anderen Worten kann das virtuelle Objekt - nahezu als ein eigenständig agierendes virtuelle Wesen - in die Umgebung des virtuellen Fahrzeugs platziert und ggf. für eine weitere Bewegung bzw. Aktivität befähigt (sozusagen "ausgewildert") werden. Dabei kann das zumindest eine virtuelle Objekt zu einer zumindest teilweise (von außerhalb des Objekts) gesteuerten und/oder zumindest teilweise zu einer (innerhalb des Objekts) selbstgesteuerten (quasi selbstbestimmten) Aktivität, z.B. einer Bewegung, Aktion und/oder Interaktion, befähigt bzw. aktiviert werden.

Ein Muster und/oder ein oder mehrere Parameter der Bewegung und/oder des Verhaltens des virtuellen Objekts können dabei bei unterschiedlichen virtuellen Objekten und/oder im Verlauf der Zeit bei einem virtuellen Objekt variiert werden. Das Variieren kann zumindest teilweise gemäß einer vorausbestimmten Abhängigkeit (z.B. nach einer Funktion) und/oder zumindest teilweise zufällig erfolgen.

In einem vereinfachten Fall kann das Erzeugen von Datenabschnitten repräsentierend ein virtuelles Objekt (auch) durch eine Auswahl, einen Abruf und/oder ein Abspielen von (z.B. zumindest teilweise vorgespeicherten, ggf. vorab aufgenommenen) das virtuelle Objekt repräsentierenden Datenabschnitten (z.B. aus einer Datenbank) erfolgen. Diese können z.B. ein oder mehrere Merkmale der Beschaffenheit des virtuellen Objekts, seiner Bewegung und/oder seines Verhaltens repräsentieren. Die Datenabschnitte repräsentierend das eine oder die mehreren virtuellen Objekte können Bilder (z.B. Kameradaten), Wärmebilder, Bildsequenzen, Punktewolken, sogenannte Radar-Objekte und/oder LIDAR-Objekte umfassen, die auch ein reales Fahrzeug bei einem entsprechenden realen Objekt erfassen würde, oder ähnlich beschaffen sein. Insbesondere können die Datenabschnitte repräsentierend virtuelle Objekte etwa dieselben oder entsprechende Merkmale, wie z.B. Format und/oder Qualität, aufweisen wie Bilder (z.B. Kameradaten), Wärmebilder, Bildsequenzen, Punktewolken, sogenannte Radar-Objekte und/oder LIDAR-Objekte, die ein reales Fahrzeug (z.B. mit seinen Sensoren) erfasst. Die Datenabschnitte können die Daten eines realen Sensors des Fahrzeugs beim Auftreten eines dem virtuellen Objekt ähnlichen bzw. entsprechenden realen Objekts simulieren bzw. modellhaft nachbilden.

Die Bewegungen, Aktionen und/oder Reaktionen des Objekts können zumindest teilweise abhängig von einem Parameter der Umgebung, einem Parameter eines realen Objekts in seiner Umgebung, und/oder zumindest teilweise abhängig von einer Zufallsgröße ermittelt werden.

Beispielweise kann sich ein virtuelles Objekt derart bewegen, agieren und/oder reagieren, wie es ein durchschnittliches (z.B. typisches), einer bestimmten Klasse entsprechendes Objekt und/oder ein Objekt von einer (z.B. für seine Klasse) durchschnittlichen Gestalt mit einem durchschnittlichen (z.B. typischen bzw. statistisch normalen) Verhalten oder vom einem durchschnittlichen Verhalten (z.B. um einen Abweichungswert bzw. Toleranzwert) abweichenden Verhalten tun würde.

Beispielsweise kann ein virtuelles Objekt, das einem virtuellen Tier, z.B. einer Katze, entspricht, sich (z.B. als eine entsprechende Simulation bzw. entsprechende Datenabschnitte) etwa entsprechend einem virtuellen Tier, z.B. entsprechend einer Katze, verhalten und auf die reale Umgebung einschließlich anderer Verkehrsteilnehmer reagieren bzw. mit dieser interagieren. Die virtuelle Katze kann sozusagen "zum Spazieren herausgelassen" werden und dabei insbesondere in die (virtuelle) Umgebung des Fahrzeugs gelangen bzw. eine Rolle in der Fahrsimulation spielen. Auch kann z.B. ein virtuelles Tier ausrutschen und/oder einen (virtuellen) Tod erleiden, z.B. wenn ein Fahrbahnreibwert als ein Parameter der Umgebung angibt, dass die Fahrbahn bzw. ein Bürgersteig derzeit glatt ist.

Alternativ oder zusätzlich kann ein virtuelles Objekt gültig werden (d.h. in Form entsprechender Daten erscheinen bzw. aktiviert werden), wenn eine Situation, z.B. eine mit einem bestimmten Muster von Parametern gekennzeichnete Situation, wie z.B. eine Fahrsituation, erkannt wird. Das Verfahren kann dadurch Gegebenheiten, Situationen, Zustände und die entsprechenden Reaktionsdaten erzeugen bzw. verwendbar machen, die besonders praxisrelevant und/oder für die Praxis und/oder gewünschte Sonderfälle in einem bestimmten, gewünschten (auch hohen) Maße repräsentativ sind. Diese können von einem (sonst typischerweise durch Menschen geplanten bzw. nachgestellten) Test des Systems des Fahrzeugs weitgehend unabhängig sein. Daher kann ein Einfluss möglicher menschlicher Fehler auf das endgültige Produkt, z.B. eine zur Auslieferung bestimmte Version des Fahrzeugsystems, wesentlich reduziert werden.

Derartige virtuelle Objekte können (auch unabhängig von weiteren in diesem Dokument enthaltenen Merkmalen) erfindungsgemäß auch für weitere Zwecke und in einem anderen Kontext eingesetzt sein. Daher kann ein virtuelles Objekt an sich als ein Aspekt der Erfindung betrachtet werden.

Insbesondere kann das Backend mit Ressourcen eingerichtet sein, die Ressourcen (z.B. jeweils entsprechende bzw. nächstähnliche Art der Ressourcen) eines etwa zur selben Zeit üblichen Fahrzeugsystems bzw. des Entwicklungsstandes um einen Faktor 10², 10³, 10⁴, 10⁵, 10⁶ oder sogar10⁸ übertreffen. Das Backend gehört ebenfalls zur Erfindung bzw. kann als ein Aspekt der Erfindung bzw. als ein Teil des erfindungsgemäßen Systems betrachtet werden.

Unter dem Begriff "Backend" kann im Rahmen des vorliegenden Dokuments insbesondere ein Server, eine Cloud oder ein Rechenzentrum (jeweils mit einer zentralen oder dezentralen Architektur) verstanden werden. Ferner kann das Backend eine Entwicklungsumgebung umfassen oder sein.

Beispielsweise können Datenabschnitte, die das eine oder die mehreren virtuellen Objekte repräsentieren (z.B. als die einem zu dem virtuellen Objekt korrespondierenden, von diesem nachgebildeten realen Objekt entsprechenden) Sensordaten und/oder ein Datenmodell, insbesondere auf Basis eines geometrischen Modells (z.B. in 2D oder 3D) eines Bewegungsmodells, eines Verhaltensmodells bzw. 3D+Time des virtuellen Objekts sein oder umfassen. Dieser Schritt wird bevorzugt im Backend vorgesehen. Somit stehen einerseits sehr viel mehr Rechenressourcen für diesen bzw. weitere Schritte zur Verfügung als es in einem Fahrzeug möglich wäre (was das Verfahren unter Umständen erst möglich macht) und andererseits können unterschiedliche Varianten der zweiten Datenabschnitte (auch gleichzeitig oder quasigleichzeitig) erzeugt werden.

Beispielsweise können quantitativ und/oder qualitativ unterschiedliche virtuelle Fahrsituationen bzw. Umgebungen erzeugt werden. Der Begriff "Umgebung" eines (z.B. eines zunächst hypothetischen oder virtuellen) Fahrzeugs ist im Rahmen des vorliegenden Dokuments insbesondere unabhängig von einer realen Position, z.B. einer realen Geo-Position oder der entsprechenden Ortschaft, aufzufassen. Auch müssen nicht alle Merkmale, Objekte bzw. Gegebenheiten der Umgebung im Verfahren berücksichtigt werden oder z.B. durch die ersten Datenabschnitten repräsentiert werden. Vielmehr kann eine selektive und/oder eine, insbesondere dynamisch, veränderliche Auswahl von realen Objekten, Parametern und/oder Daten zu der Umgebung verarbeitet werden.

Beispielsweise können Datenabschnitte, die das zumindest eine virtuelle Objekt repräsentieren, wie z.B. Bilder, Wärmebilder, Punktwolken, sogenannte Radar-Objekte, LIDAR-Objekte oder entsprechende Bildsequenzen (zumindest in etwa, annähernd, modellhaft, modellbasiert) erzeugt werden, die das reale Fahrzeug, insbesondere ein realer Sensor bzw. ein sensorgetriebenes System des Fahrzeugs, erzeugen würde, wenn in der realen Umgebung ein dem virtuellen Objekt entsprechendes reales Objekts erscheinen würde.

Vereinfacht erklärt können physikalische Gegebenheiten, Zusammenhänge und/oder Effekte berücksichtigt werden, die (z.B. auf einen gewählten Teil der realen Umgebung) zutreffen würden, wenn das virtuelle Objekt ein (entsprechendes) reales Objekt wäre.

Unter dem Begriff "Entwicklungsstand" ist ein Entwicklungsstand eines Fahrzeugsystems, z.B. umfassend eine Version einer Software und/oder einer Hardware des Fahrzeugs oder eines Systems des Fahrzeugs zu verstehen. Insbesondere kann zu dem Entwicklungsstand eine sogenannte Middleware und/oder ein oder mehrere neuronale Netze bzw. ein Checkpoint eines neuronalen Netzes gezählt werden. Ferner kann aber auch ein entsprechender Stand des Systems des Fahrzeugs, ein Stand zur Auslieferung des Fahrzeugs oder eines Updates bzw. Upgrades oder ein Weiterentwicklungsstand im Rahmen dieses Dokuments als der Entwicklungsstand aufgefasst werden. Beispielsweise kann unter dem Begriff Entwicklungsstand auch ein (z.B. finaler, zur Auslieferung bzw. zum Update an Fahrzeuge bestimmter) entwickelter, abgesicherter oder trainierter Entwicklungsstand für ein System des Fahrzeugs verstanden werden.

Unter dem Begriff "Fahren" kann im Rahmen dieses Dokuments alternativ oder zusätzlich das (z.B. automatisierte) Parken bzw. Rangieren verstanden werden.

Als "real" sind im Rahmen dieses Dokuments physikalisch, insbesondere mechanisch wirksame Gegebenheiten, z.B. Objekte, Objektmerkmale, etc. zu verstehen.

Als "virtuell" sind im Rahmen dieses Dokuments auf Daten basierte bzw. durch Daten repräsentierte bzw. ausgedrückte Gegebenheiten, die insbesondere keine entsprechende unmittelbare physikalische bzw. mechanisch wirksame Gegebenheiten oder Ereignisse, wie z.B. eine Betätigung eines Aktors, nach sich ziehen, zu verstehen. Die virtuellen Gegebenheiten werden insbesondere (zumindest vorab bzw. vorerst) durch jeweilige Daten, Datenabschnitte bzw. entsprechende Datenstrukturen ausgedrückt.

Der Begriff "Reaktion" ist im Rahmen dieses Dokuments alternativ oder zusätzlich als eine "Interaktion" zu verstehen. Beispielsweise können Reaktionsdaten (alternativ oder zusätzlich zu einer Reaktion) eine Interaktion, insbesondere eine Interaktion eines Entwicklungsstands mit einem oder mehreren virtuellen Objekten kennzeichnen bzw. repräsentieren.

Bevorzugt können Reaktionsdaten eines Entwicklungsstandes erzeugt werden, indem die Datenabschnitte repräsentierend die virtuellen Objekte (unmittelbar, mittelbar bzw. nach einem Verarbeitungsschritt) als ein Input für einen Entwicklungstand des Fahrzeugsystems verwendet werden.

Insbesondere können Reaktionsdaten eines Entwicklungsstandes des Fahrzeugsystems ermittelt werden, die kennzeichnend für eine (spätere, potentielle) Reaktion des Fahrzeugsystems sind. Dies ist insbesondere derart zu verstehen, dass die Reaktionsdaten erzeugt werden können, die einen Rückschluss auf den Betrieb des Fahrzeugsystems, insbesondere eine Reaktion des Fahrzeugsystems, und/oder eine Prädiktion betreffend den Betrieb des Fahrzeugsystems, insbesondere betreffend eine Reaktion des Fahrzeugsystems erlauben.

Insbesondere können zu den Reaktionsdaten des Entwicklungsstandes Daten des Fahrzeugs bzw. einer Emulation des Fahrzeugs oder eines Teils des Fahrzeugs (z.B. mit dem zusammen der erste Entwicklungsstand betrieben wird) gezählt werden, die unter dem Einfluss des Entwicklungsstandes und/oder der Datenabschnitte repräsentierend das eine oder die mehreren virtuellen Objekte verändert worden sind. Als maßgeblich kann dabei ein jeweiliges Maß der Veränderung, insbesondere ein unmittelbarer oder mittelbarer sogenannter Impact bzw. eine in Bezug auf ein Teilsystem geltende sogenannte Systemantwort gelten.

Beispielsweise können es Änderungen von Zuständen oder Parametern des Fahrzeugs bzw. einer Emulation des Fahrzeugs oder eines Teils des Fahrzeugs sein, die durch die Reaktion des (ersten) Entwicklungsstands auf die zweiten Datenabschnitte bedingt bzw. verursacht werden.

Dabei kann eine Reaktionen angeregt und/oder Reaktionsdaten erzeugt werden, die für eine reale Reaktion bzw. Reaktionsdaten kennzeichnend (insbesondere repräsentierend) ist, die sich ergeben würde wenn ein oder mehrere dem einen oder mehreren virtuellen Objekten (z.B. ihren Merkmalen, ihrer Anordnung, ihrer Bewegung, ihrer Veränderung, ihrem Verhalten) entsprechende reale Objekte, insbesondere in einer entsprechenden Anordnung, mit jeweils entsprechender Bewegung, entsprechender Veränderung oder entsprechendem Verhalten, auftreten bzw. existieren würden. Bevorzugt sind die (virtuelle) Reaktionen und/oder Reaktionsdaten für eine reale Reaktion bzw. Reaktionsdaten kennzeichnend, die existieren bzw. auftreten würden, wenn ein oder mehrere reale Objekte mit einer durch die Datenabschnitte repräsentierend das eine oder die mehreren virtuellen Objekte gekennzeichneten Beschaffenheit, Anordnung, Bewegung, Veränderung, Verhalten der virtuellen Objekte in einer entsprechenden Anordnung, mit jeweils entsprechenden Bewegung, Veränderung, Verhalten, existieren bzw. auftreten würden.

Insbesondere kann ein Entwicklungsstand als eine Emulation bzw. Simulation des realen Fahrzeugsystems im Backend betrieben werden.

Der Entwicklungsstand kann auf Basis der Datenabschnitte repräsentierend das eine oder die mehreren virtuellen Objekte bzw. der Daten auf Basis der Datenabschnitte betreibbar sein bzw. betrieben werden. Die Reaktionsdaten können einem Output des Entwicklungsstandes und/oder einem Parameter, einem Zustand oder einer Zustandsveränderung des entsprechenden Fahrzeugsystems entsprechen bzw. für diese kennzeichnend sein. Beispielsweise können die Reaktionsdaten einen oder mehrere interne (z.B. in einem regulären bzw. späteren Betrieb des entsprechenden Fahrzeugsystems am Ausgang sichtbare oder unmittelbar wirksame) Parameter, Zustände, Zustandsveränderungen (beispielsweise eines Zustandsautomaten, Steuerung, Regelung, Formel, etc.) kennzeichnen.

Alternativ oder zusätzlich können die Reaktionsdaten solchen Daten entsprechen oder solche Daten kennzeichnen, die bei einem realen Fahrzeugsystem (welches durch den ersten bzw. zweiten Entwicklungsstand repräsentiert wird bzw. mittels des Entwicklungsstands entwickelt, abgesichert, getestet oder trainiert wird):
- zu einer Betätigung eines Aktors des Fahrzeugs und/oder einer Ausgabe einer Fahrerinformation dienen; und/oder
- eine (insbesondere geplante) Trajektorie (alternativ oder zusätzlich zu verstehen als eine Bahnplanung) des Fahrzeugs, insbesondere eine aufgrund des virtuellen Objekts veränderte Trajektorie bzw. Bahnplanung, beschreiben;
- zum Ansteuern eines weiteren Systems des Fahrzeugs dienen, z.B. Steuerungssignale; und/oder
- an das Bordnetz des Fahrzeugs und/oder nach außerhalb des Fahrzeugs versendet werden;
   und/oder
- einen Ressourcenverbrauch des Entwicklungsstand (z.B. betreffend Rechenleistung, Speicher, Laufzeit, etc.) beschreiben;
   und/oder
- einen Zustand, Zustandsübergang, Parameter und/oder Speicherinhalt.

Alternativ oder zusätzlich können Reaktionsdaten (auch zu verstehen als Daten auf Basis der Reaktionsdaten) ermittelt werden, die ein Maß einer Konsequenz einer Reaktion des Entwicklungsstands auf die zweiten Datenabschnitte kennzeichnen. Dabei können Daten ermittelt und berücksichtigt werden, die eine Konsequenz eines Ereignisses, insbesondere einer veränderten Trajektorie des Fahrzeugs, einer neuen oder veränderten Kollision, welches abhängig von dem einen oder mehreren virtuellen Objekte ermittelt wird (z.B. virtuell auftritt und somit auch in der Realität auftreten würde) kennzeichnen. Beispielsweise können Reaktionsdaten eines (z.B. automatisiert fahrenden) Fahrzeugs ermittelt werden, die eine Konsequenz kennzeichnen, die auftreten würde, wenn bei einer bestimmten Fahrsituation ein Kind auf die Straße rennen würde. Die Erfindung ermöglicht es, einen oder mehrere Entwicklungsstände mit einer Vielzahl von Varianten einer derartigen (mittels eines virtuellen Kindes und ohne ein Risiko für die Öffentlichkeit) erzeugten teilweise realen und teilweise virtuellen Situation in der durch die zweiten Datenabschnitte repräsentierten Umgebung (testweise und/oder zum Trainieren eines neuronalen Netzes) zu betreiben.

Die Reaktionsdaten können eine neue Reaktion des Entwicklungsstands beschreiben oder einen Unterschied der Reaktion (z.B. in Form einer Differenz, eines Faktors, eines Maßes einer Abweichung oder einer Funktion der Abweichung), z.B. im Vergleich zu einer Reaktion, die ohne das Vorhandensein des einen oder der mehreren virtuellen Objekte zutreffen würde. Beispielsweise kann dies eine aufgrund des virtuellen Objekts veränderte Trajektorie bzw. Bahnplanung des Fahrzeugs betreffen oder alternativ oder zusätzlich einen Unterschied zu der Reaktion, die ohne das eine oder die mehreren virtuellen Objekte zutrifft. Die Reaktion kann der Reaktion des realen Fahrzeugsystems entsprechen, die mit realen Objekten (d.h. z.B. bei einer Begegnung mit realen Objekten, die etwa den virtuellen Objekten entsprechen) zu erwarten wäre bzw. auftreten würde.

Ferner können auf Basis der Reaktionsdaten Daten ermittelt werden, die kennzeichnend sind für eine Empfindlichkeit der Reaktionsdaten auf eine Veränderung eines Parameters des einen oder der mehreren virtuellen Objekte.

Es kann eine Vielzahl von, insbesondere unterschiedlichen, Entwicklungsständen verwendet werden. Diese können z.B. eine Vielzahl elektronischer Module umfassen oder damit zusammenwirken, die zumindest die (zum Ermitteln der Reaktionsdaten) relevanten Merkmale eines realen Systems des Fahrzeugs aufweisen oder Prototype des Systems des Fahrzeugs sind.

Die Reaktionsdaten können einen Rückschluss auf eine (für das Entwickeln, Absichern, Trainieren und/oder Betreiben eines Fahrzeugsystems sehr wertvolle) Reaktion eines realen Fahrzeugs (mit einem realen System, das die Merkmale des Entwicklungsstands aufweist) auf eine reale Umgebung, Bedingung oder Situation kennzeichnen, die aus oder mit einem oder mehreren virtuellen Objekten gebildet worden wäre.

Daher kann es zum Verfahren gehören, insbesondere automatisiert, einen Rückschluss auf das Verhalten und/oder eine Performance eines realen Fahrzeugsystems auf eine reale Umgebung bei realen Bedingungen und/oder bei einer realen Situation, insbesondere Fahrsituation, zu ermitteln, die mit der auf Basis der virtuellen Objekte gebildeten Situation korrespondiert.

Ferner kann das Verfahren diverse Verarbeitungen und/oder Nutzungen der Reaktionsdaten, insbesondere der Rückschlüsse auf Basis der Reaktionsdaten zum Entwickeln, Absichern, Trainieren und/oder Betreiben eines Entwicklungsstandes, z.B. in realen Fahrzeugen, umfassen.

Beispielsweise können ein oder mehrere Parameter eines Entwicklungsstands oder eines mit diesem korrespondierenden bzw. entsprechenden Fahrzeugsystems (z.B. eines entsprechenden Fahrzeugsystems bei einer Vielzahl von Fahrzeugen, etwa der Kundenfahrzeuge im Feld) abhängig von den Reaktionsdaten verändert bzw. aktualisiert werden.

Jeder in diesem Dokument beschriebener Parameter, jedes Merkmal und jeder Schritt des Verfahrens kann abhängig von dem Automatisierungsgrad des Fahrbetriebs des Fahrzeugs gewählt werden. Beispielsweise können ein oder mehrere Parameter des einen oder mehrerer virtueller Objekte und/oder der durch diese gebildete Fahrsituation abhängig von dem Automatisierungsgrad des jeweiligen Fahrzeugs bestimmt oder angepasst werden.

Die Erfindung umfasst ferner die Idee, anstatt auf das Vorkommen einer bestimmten (z.B. auch extrem seltene vorkommente) Situation eines Fahrzeugs (auch zu verstehen als: das Geschehen in der Umgebung des Fahrzeugs) bzw. auf eine bestimmten (z.B. selten erfüllbaren) Kriterien entsprechende Fahrsituation zu warten, welche sich für die Entwicklung, die Absicherung, und/oder das Trainieren eines Fahrzeugsystems eignet oder die zumindest teilweise fehlt, die entsprechenden Daten mittels des einen oder der mehreren virtuellen Objekte, insbesondere der Modifikation der ersten Datenabschnitte, zu erzeugen. Dabei können Daten und Erkenntnisse gewonnen werden, für welche sonst ein Einfahren von mehreren Milliarden von Kilometern mit einer entsprechen großen Versuchsflotte notwendig gewesen wäre.

Beispielsweise können eine oder mehrere Fahrsituationen, die in Realität in keinem der realen Fahrzeuge vorgekommen sind oder nur mit einer sehr niedrigen Wahrscheinlichkeit erwartbar sind, (als solche bzw. als entsprechende Muster der Fahrsituationen) bestimmt werden. Daraufhin können diese Fahrsituationen mittels des einen oder der mehreren virtuellen Objekte repräsentiert werden.

Beispielsweise werden die Reaktionsdaten und/oder die jeweiligen Maße der Performance, einer Systemantwort, einer Empfindlichkeit, einer Reaktion der Fahrzeugfunktion ermittelt. Diese können verwendet oder (zu einer weiteren Verwendung) weiterverarbeitet werden. Bevorzugt umfasst das Verfahren, dass diese bzw. derartige Daten mit einem oder mehreren Schwellwerten verglichen werden.

Die Reaktionsdaten (bzw. auf diesen basierende Daten) können zur Sicherstellung, insbesondere zum Nachweis bestimmter Eigenschaften, insbesondere betreffend ein Risiko, eine Konsequenz und/oder eine Performance von den entsprechenden den Entwicklungsstand umfassenden Fahrzeugen (in der Realität bzw. im Fahrbetrieb) verwendet werden. Die Daten können für eine Homologation von Fahrzeugen und/oder als eine Bedingung, insbesondere Voraussetzung, zur Ausführung bestimmter Funktionen bzw. Leistungsmerkmale der Fahrzeuge oder einer Betriebsgenehmigung für Fahrzeuge, insbesondere zumindest teilweise automatisiert fahrbarer Fahrzeuge, bereitgestellt und/oder verwendet werden.

Besonders bevorzugt können für unterschiedliche Anwendungen oder zur Bildung von Varianten der Reaktionsdaten das Verhältnis zwischen der Anzahl und/oder bestimmten Parametern der virtuellen Objekte und bestimmten Parametern der realen Objekte (die in dem einen oder den mehreren zweiten Datenabschnitten repräsentiert werden) variiert werden. Dabei kann z.B. die Menge und/oder Diversität der Reaktionsdaten (auch zu verstehen als auf diesen basierter Daten) sowie der Verwendungen dieser weiter erhöht werden.

Die durch die zweiten Datenabschnitte repräsentierten (teilweise realen und teilweise virtuellen) Umgebungen bzw. Information auf Basis des einen oder der mehreren derartigen Datenabschnitte (bzw. Umgebungen) können dafür bereitgestellt und/oder verwendet werden:
- zum Testen und/oder Absichern eines Entwicklungsstands eines Systems eines Fahrzeugs, z.B. indem die entsprechenden Reaktionsdaten ausgewertet werden; und/oder
- zum Ermitteln zumindest eines Performanceindikators, z.B. eines KPI des Entwicklungsstands, wobei insbesondere ein Rückschluss auf einen Performanceindikator eines realen Systems des Fahrzeugs (z.B. eines korrespondierenden Systems, z.B. mit gleichen oder ähnlichen Merkmalen) möglich ist; und/oder
- zum Nachweis einer positiven Risikobilanz des Systems des Fahrzeugs, insbesondere für einen Rückschluss auf die erwartete Performance in Bezug auf reale Objekte; und/oder
- zum Trainieren eines neuronalen Netzes, wobei die resultierenden Lerndaten (z.B. Gewichtsdaten, Bias Terms, Checkpoints) insbesondere zum Betreiben eines realen Fahrzeugs einsetzbar sind; und/oder
- zum Freischalten und/oder Sperren von einem oder mehreren Leistungsmerkmalen zumindest eines Fahrzeugs, insbesondere mit dem gleichen oder ähnlichen Systemen wie der Entwicklungsstand. Dies kann auch nach der Auslieferung des Fahrzeugs, z.B. remote erfolgen; und/oder
- zum Freischalten und/oder Sperren von (bestimmten) realen Reaktionen des Systems des Fahrzeugs für künftige (reale) Situationen, die der zumindest einen neuen Situation hinreichend ähnlich sind; und/oder
- zum Verändern einer digitalen Karte und/oder von Daten zur Interpretation einer digitalen Karte, insbesondere zur Freigabe oder Sperrung bestimmter Fahrbahnabschnitte für die Ausführung bestimmter Leistungsmerkmale, insbesondere bestimmter Reaktionen auf bestimmte reale Situationen, die der zumindest einen neuen Situation hinreichend ähnlich sind.

Zu der Erfindung gehören ferner die Daten auf Basis der Reaktionsdaten, z.B. eine Datenbasis mit einer Vielzahl der Daten oder Datensätze auf Basis diverser, insbesondere einer Vielzahl unterschiedlicher Reaktionsdaten. Diese kann eine Entwicklungsdatenbasis oder Absicherungsdatenbasis sein.

Ferner umfasst die Erfindung die oben genannten oder weitere Systeme bzw. Funktionalitäten in Fahrzeugen oder Systemen bzw. Funktionalitäten zum Betreiben von Fahrzeugen, die auf Basis der zumindest einen virtuellen Umgebung entwickelt, abgesichert, trainiert, ausgeführt bzw. ausführbar gemacht werden.

Eine weitere vorteilhafte Ausführungsform der Erfindung ist die Verwendung, insbesondere das Betreiben, einer nach den Merkmalen der Erfindung erzeugten teilweise virtuellen Umgebung eines Fahrzeugs zum Test und/oder zur Absicherung eines Entwicklungsstands eines Fahrzeugsystems. Das Fahrzeugsystem kann ein System zum zumindest teilautomatisierte Fahren oder Parken zur Verwendung in einem Fahrzeug sein. Dabei können (sehr schnell, günstig und ungefährlich) Daten gewonnenen werden, die auch kennzeichnend sind für das Verhalten des Systems des Fahrzeugs in vergleichbaren realen Umgebungen des Fahrzeugs.

Beispielsweise handelt es sich bei dem Fahrzeugsystem (und insbesondere bei dem ersten und/oder zweiten Entwicklungsstand) um ein Fahrerassistenzsystem oder System zur Ausführung oder Unterstützung einer zumindest teilweise automatisierten Längsführung, Querführung und/oder Manöverausführung des Fahrzeugs, wie z.B. ein System zum zumindest teilweise automatisierten Fahren und/oder Parken (zu verstehen auch als ein Teil des Fahrzeugsystems bzw. ein das Fahrzeugsystem umfassendes System). Alternativ oder zusätzlich kann das Verfahren bei diversen (anderen) Systemen und/oder Funktionalitäten des Fahrzeugs (ggf. in einer sinngemäß bzw. zweckmäßig angewandten Ausgestaltung) verwendet werden.

Durch die Erfindung ergibt sich die Möglichkeit, den Entwicklungsstand eines (beliebigen oder des bestimmten) Systems und/oder einer Funktionalität eines Fahrzeugs bzw. zum Verbau oder zur Nutzung in einem Fahrzeug (sozusagen im "Trockenlauf" bzw. mit verringerten Kosten und/oder Risiken) zu testen, abzusichern und/oder die zu dem Entwicklungsstand bzw. System gehörende künstliche Intelligenz, insbesondere ein neuronales Netz, zu trainieren.

Insbesondere können auch (z.B. für einen Nachweis der Performance, für die Zulassung und/oder Markteinführung des Fahrzeugs relevante) virtuelle Umgebungen umfassend sehr selten vorkommente Situationen und/oder Randbedingungen sowie die zugehörigen Reaktionsdaten des Entwicklungsstands gewonnen werden. Eine entsprechend hohe (z.B. zum Nachweis erforderliche) Anzahl von (z.B. gewünschten) Fahrsituationen und/oder der (z.B. den gewünschten Fahrsituationen entsprechenden) Reaktionsdaten kann sehr schnell, insbesondere durch überwiegend zeitgleich laufende Prozesse, erzeugt werden.

Beispielsweise kann ein Auffinden von Fehlern oder Performanceschwächen oder ein Nachweis der Performance, der Sicherheit bzw. Verlässlichkeit betreffend zumindest ein System des Fahrzeugs erfolgen. Beispielsweise können ein oder mehrere Regressionstests (ebenso schnell wie effektiv) nach einer Veränderung, z.B. einer Fehlerkorrektur, des Entwicklungsstands ausgeführt werden. Somit kann die Entwicklungszeit bzw. der Entwicklungszyklus signifikant verkürzt werden.

Eine z.B. im Rahmen einer Entwicklung, eines Testens, einer Absicherung und/oder eines Trainierens von Fahrzeugen zu absolvierende reale Fahrstrecke kann wesentlich reduziert werden. Beispielsweise können Zeit, Aufwand und Kosten gespart und/oder eine verbesserte Absicherung des zumindest einen Systems des (zu entwickelnden, abzusichernden bzw. zu trainierenden) Fahrzeugs erreicht werden.

Nachfolgend sind einige untereinander und mit weiteren in diesem Dokument beschriebenen Merkmalen kombinierbare Beispiele zur Verwendung der Datenabschnitte bzw. der abhängig von den Datenabschnitten abhängiger Daten aufgezählt.

In einem Beispiel kann eine sogenannte Wirkkette und/oder Teile der Wirkkette des Entwicklungsstands und/oder Teile des Fahrzeugs getestet, abgesichert und/oder trainiert werden.

Bevorzugt können Performancemessungen, Ressourcenkonsum und/oder Grenzparameter des Fahrzeugsystems, z.B. einer oder mehrerer Einheiten, Komponenten oder Teile der Wirkkette einer Fahrzeugfunktionalität ermittelt werden. Beispielsweise kann ein Belastungstest, ein Wechselwirkungstest oder ein Performancetest des Entwicklungsstands bzw. eine entsprechende Absicherung des Fahrzeugsystems ausgeführt werden.

In einem weiteren Beispiel kann ein Test eines ein neuronales System bzw. eine künstliche Intelligenz umfassenden Teils des Entwicklungsstands ausgeführt werden. Beispielsweise kann dabei ein Betriebsparameter des neuronalen Netzes, welches unter Einfluss virtueller Objekte steht, ermittelt werden.

In einem weiteren Beispiel kann ein Parameter eines Energieverbrauchs, einer Energieverwertung und/oder einer Energieeffizienz des Entwicklungsstands und/oder des Fahrzeugs abhängig von einem oder mehreren virtuellen Objekten ermittelt werden. Beispielsweise kann ein Energieverbrauch, eine Energieverwertung und/oder eine Energieeffizienz eines Fahrzeugs abhängig von Verkehrsteilnehmern ermittelt werden, für die das eine oder die mehreren virtuellen Objekte stellvertretend verwendet werden.

In einem weiteren Beispiel kann z.B. eine Betriebstemperatur, eine thermische Belastung (bzw. ein Unterschied betreffend Betriebstemperatur und/oder thermische Belastung) eines Teils des Entwicklungsstands bzw. des Fahrzeugs ermittelt und berücksichtigt werden, die abhängig von dem einen oder den mehreren virtuellen Objekten auftreten.

Beispielsweise können solche Tests bzw. Absicherungsaktivitäten mit jeweils unterschiedlicher Anzahl, Anordnung, Bewegung, Verhalten, Veränderungen des einen oder der mehreren virtuellen Objekte ausgeführt werden. Dabei können bestimmte (bzw. konkrete) Anhängigkeiten, zwischen den Parametern des einen oder der mehreren Objekte, einer durch diese gebildeten Anordnung oder Fahrsituation und einem Einfluss auf bestimmte Einheiten, Komponenten, Teilen der Wirkkette und/oder ihrer jeweiligen Performance, Ressourcenkonsum, Leistungsaufnahme, etc. ermittelt werden. Derartige Abhängigkeiten können z.B. für eine Parametrierung oder Weiterentwicklung des Fahrzeugs, des Fahrzeugsystems, einer Einheit, Komponente, eines Teils der Wirkkette und/oder der Fahrzeugfunktionalität verwendet werden.

Im Verfahren insgesamt, aber bevorzugt in diesem Fall, können zu dem Entwicklungsstand auch (reale, emulierte und/oder simulierte) Teile des Fahrzeugs gezählt werden, die über das (ggf. künftige) Fahrzeugsystem hinausgehen. Dies können z.B. Schnittstellensysteme des Fahrzeugsystems sein.

Gemäß einer weiteren Ausgestaltung repräsentieren die Datenabschnitte repräsentierend zumindest ein virtuelles Objekt, einen zeitlichen und/oder räumlichen Verlauf eines oder mehrerer Parameter des jeweiligen virtuellen Objekts in Bezug auf eine weitere Gegebenheit in der Umgebung des zumindest einen virtuellen Objekts.

In Bezug auf die zumindest eine weitere Gegebenheit kann insbesondere heißen, dass eine zu der weiteren Gegebenheit relative Position, Bewegung, Verhalten, Veränderung repräsentiert wird, und/oder eine Position, Bewegung, Verhalten, Veränderung des zumindest einen virtuellen Objekts und der zumindest einen Gegebenheit denselben Bezug, z.B. zu einem (virtuellen, lokalen) Koordinatensystem, Zeitwerten und/oder Parameter aufweisen.

Bevorzugt repräsentieren die Datenabschnitte repräsentierend zumindest ein virtuelles Objekte einen zeitlichen und/oder räumlichen Verlauf des einen oder der mehreren Parameter des jeweiligen virtuellen Objekts in Bezug auf eine weitere bewegliche und/oder veränderliche Gegebenheit.

Die zumindest eine weitere Gegebenheit kann z.B. ein anderes virtuelles Objekt oder ein reales Objekt sein. Das zumindest eine reale Objekt kann (in einer sonst virtuellen Umgebung) durch entsprechende Datenabschnitte repräsentiert werden. Beispielsweise können das eine oder die mehreren realen Objekte als Parameter und/oder Datenabschnitte repräsentiert werden, die analog, ähnlich oder korrespondierend mit den Parametern bzw. Datenabschnitten der virtuellen Objekte definiert sind.

Aus einer derartigen Repräsentation bzw. durch das Generieren und/oder Darstellen der entsprechenden Daten kann sich als wesentlicher Vorteil ergeben, dass lediglich vergleichsweise wenige Daten sehr effizient ermittelt werden können. Dies kann, z.B. erfolgen ohne eine gesamte Situation etwa als jeweils absolute Daten zu ermitteln.

Gemäß einer weiteren Ausgestaltung repräsentieren die Datenabschnitte repräsentierend das zumindest eine virtuelle Objekt eine Bewegung und/oder ein Verhalten des virtuellen Objekts, insbesondere in Bezug auf eine weitere Gegebenheit in der Umgebung des virtuellen Objekts.

Die Bewegung des zumindest einen virtuellen Objekts, insbesondere eine bestimmte Bewegung oder ein bestimmter Teil der Bewegung des virtuellen Objekts, kann eine von der Umgebung und/oder von einer, mehreren oder allen Gegebenheiten in der Umgebung im Wesentlichen unabhängige Bewegung (oder ein unabhängiger Teil einer Bewegung, die das virtuelle Objekt insgesamt vollbringt) sein. Bevorzugt kann eine Bewegung des virtuellen Objekts in Bezug auf zumindest eine (weitere) Gegebenheit ausgeführt werden. Eine Bewegung kann dabei (z.B. mit den jeweiligen Datenabschnitten) insbesondere als ein zeitlich und/oder räumlich ausgedehnter Vorgang repräsentiert (auch ausgedrückt) werden bzw. zum Vorschein kommen.

Das Verhalten des zumindest einen virtuellen Objekts, insbesondere ein bestimmtes Verhalten oder ein bestimmtes Merkmal des Verhaltens des virtuellen Objekts, kann eine von der Umgebung und/oder von einer, mehreren oder allen Gegebenheiten in der Umgebung im Wesentlichen unabhängiges Verhalten (oder ein unabhängiges Merkmal des Verhaltens des virtuellen Objekts) sein. Bevorzugt kann das Verhalten des virtuellen Objekts in Bezug auf zumindest eine (weitere) Gegebenheit ausgeführt werden. Ein Verhalten kann dabei ein von einer konkreten Bewegung und/oder Veränderung abstrahiertes Verhalten sein. Das Verhalten des zumindest einen virtuellen Objekts (grundsätzlich und/oder in Bezug auf die zumindest eine Gegebenheit) kann zeitlich und/oder räumlich verändert werden bzw. (z.B. in den erzeugten Datenabschnitten) zum Vorschein kommen.

Gemäß einer weiteren Ausgestaltung werden das eine oder die mehreren virtuellen Objekte abhängig von Datenabschnitten repräsentierend eine Gegebenheit, die insbesondere jeweils einen zeitlichen und/oder räumlichen Verlauf eines oder mehrerer Parameter einer weiteren Gegebenheit in der Umgebung umfassen, variiert, derart, dass das eine oder die mehreren virtuellen Objekte auf die Gegebenheit reagieren, einwirken oder mit der Gegebenheit interagieren.

Dabei können ein oder mehrere Parameter der zumindest einen Gegebenheit auf eine vorausbestimmte Art und Weise variiert, insbesondere abhängig von dem einen oder den mehreren Parametern des einen oder der mehreren virtuellen Objekte, einem oder mehreren (bisherigen) Parametern der weiteren Gegebenheit und/oder einem oder mehreren Parametern eines Bezugs, z.B. eines zeitlichen und/oder räumlichen Bezugs zwischen dem einen oder mehreren virtuellen Objekt und/oder der weiteren Gegebenheit, variiert werden.

Die Bewegungen, Aktionen und/oder Reaktionen des Objekts können zumindest teilweise abhängig von einem Parameter der Umgebung, einem Parameter eines realen Objekts in seiner Umgebung, zumindest teilweise abhängig von einem vorgegebenen Verhalten, insbesondere Verhaltensmuster, und/oder zumindest teilweise abhängig von einer Zufallsgröße ausgeführt werden.

Beispielweise kann sich ein virtuelles Objekt derart bewegen, agieren und/oder reagieren, wie es ein durchschnittliches (z.B. typisches), einer bestimmten Klasse entsprechendes Objekt und/oder ein Objekt von einer (z.B. für seine Klasse) durchschnittlichen Gestalt mit einem durchschnittlichen (z.B. typischen bzw. statistisch normalen) Verhalten oder mit einem von einem durchschnittlichen Verhalten (z.B. um einen Abweichungswert bzw. Toleranzwert) abweichenden Verhalten tun würde.

Beispielsweise kann ein virtuelles Objekt, das einem virtuellen Tier, z.B. einer Katze, entspricht, sich (z.B. als eine entsprechende Simulation bzw. als entsprechende Datenabschnitte) etwa entsprechend einem virtuellen Tier, z.B. entsprechend einer Katze, verhalten und auf die reale Umgebung einschließlich anderer Verkehrsteilnehmer reagieren bzw. mit dieser interagieren. Die virtuelle Katze kann sozusagen "zum Spazieren herausgelassen" werden und dabei insbesondere in die (virtuelle) Umgebung des Fahrzeugs gelangen bzw. eine Rolle in der Fahrsimulation spielen.

Beispielsweise kann das virtuelle Objekt von einem weiteren virtuellen Objekt und/oder von der zumindest einen weiteren Gegebenheit geblendet, erschreckt, in Panik versetzt oder zu einer Reaktion angeregt werden. Beispielsweise kann das virtuelle Objekt z.B. ausrutschen und/oder eine virtuelle Verletzung oder einen (virtuellen) Tod erleiden, z.B. wenn ein Fahrbahnreibwert als ein Parameter der Umgebung angibt, dass die Fahrbahn bzw. ein Bürgersteig derzeit glatt ist.

Gemäß einer weiteren Ausgestaltung handelt es sich bei der zumindest einen weiteren Gegebenheit um eine bewegliche und/oder veränderliche Gegebenheit. Dabei können die Datenabschnitte, die die zumindest eine weitere Gegebenheit repräsentieren, gemäß einem mathematischen Zusammenhang veränderlich sein.

Beispielsweise können der eine oder die mehreren Parameter der weiteren Gegebenheit (z.B. zeitlich und/oder räumlich), insbesondere gemäß einem mathematischen Zusammenhang, veränderlich sein.

Gemäß einer weiteren Ausgestaltung ist die zumindest eine weitere Gegebenheit stellvertretend für einen realen Verkehrsteilnehmer oder einen virtuellen Verkehrsteilnehmer. Alternativ, bevorzugt zusätzlich, repräsentieren die Datenabschnitte repräsentierend die zumindest eine weitere Gegebenheit einen realen Verkehrsteilnehmer oder einen virtuellen Verkehrsteilnehmer.

Ferner kann die zumindest eine weitere Gegebenheit ausnahmsweise stellvertretend für einen Teil einer stationären Gegebenheit bzw. eine stationäre Gegebenheit sein. Beispielsweise kann die zumindest eine stationäre Gegebenheit eine Fahrbahnbegrenzung, ein Zebrastreifen, eine Spurmarkierung oder eine Ampel sein oder umfassen. Die zumindest eine weitere Gegebenheit kann z.B. nahezu jede (von der Fahrbahn selbst unterschiedliche), z.B. gegenüber der Fahrbahn erhabene, Gegebenheiten sein. Die Fahrbahn, insbesondere ein unveränderlicher Teil der Fahrbahn selbst, kann (zusätzlich, z.B. als eine virtuelle Fahrbahn), muss aber nicht, repräsentiert werden. Die Umgebung, insbesondere ein unveränderlicher bzw. stationärer Teil der Umgebung, kann (zusätzlich, z.B. als eine virtuelle Umgebung), muss aber nicht repräsentiert werden. Mit anderen Worten muss die Fahrbahn oder die Umgebung nicht etwa als eine Gegebenheit verstanden bzw. als eine Gegebenheit behandelt werden.

Gemäß einer weiteren Ausgestaltung werden ein oder mehrere Parameter des einen oder der mehreren virtuellen Objekte, insbesondere kennzeichnend eine Bewegung, ein Verhalten und/oder eine Veränderung des zumindest einen virtuellen Objekts und/oder eine Rolle des zumindest einen virtuellen Objekts innerhalb einer Fahrsituation, abhängig von einem Parameter der zumindest einen weiteren Gegebenheit variiert.

Beispielsweise können der ein oder die mehreren Parameter des einen oder der mehreren virtuellen Objekte abhängig von dem Parameter oder mehreren der Parameter der zumindest einen weiteren Gegebenheit, insbesondere des virtuellen Fahrzeugs, gesteuert werden.

Alternativ oder zusätzlich können der eine oder die mehreren Parameter des einen oder der mehreren virtuellen Objekte und der eine oder die mehreren Parameter der zumindest einen weiteren Gegebenheit, insbesondere des virtuellen Fahrzeugs, abhängig von derselben Information, beispielsweise durch eine Situationsbildungsvorschrift, gesteuert werden.

Gemäß einer weiteren Ausgestaltung werden ein oder mehrere Parameter einer von dem einen oder mehreren virtuellen Objekten und/oder ein oder mehrere Parameter der zumindest einen virtuellen Gegebenheit gemäß einer Situationsbildungsvorschrift variiert.

Die Situationsbildungsvorschrift kann eine vorausbestimmte und/oder im Verfahren, insbesondere dynamisch, bestimmbare oder anpassbare Vorschrift umfassen oder sein.

Beispielsweise kann die Situationsbildungsvorschrift eine Anwendung bestimmter (vorausbestimmter und/oder im Verfahren bestimmbarer) Kriterien, z.B. zur Bildung, Bewegung und/oder Veränderung einer Anordnung aus dem einen oder den mehreren virtuellen Objekten und/oder der zumindest einen weiteren Gegebenheit umfassen. Beispielsweise werden eine oder mehrere Fahrsituationen, die einem bestimmten Muster, z.B. einer Art eines Manövers, entsprechen, gebildet. Beispielsweise können (ggf. auf Basis derselben virtuellen Objekte und/oder weiterer Gegebenheiten) eine Vielzahl von Fahrsituationen die einem oder mehreren bestimmten Mustern entsprechen, gebildet werden. Beispielsweise können tausende oder Millionen von Spurwechselvorgängen, Überholvorgängen, Ausweichvorgängen, etc. gebildet werden. Diese können sich z.B. durch unterschiedlich gewählte quantitative Parameter unterscheiden. Beispielsweise werden (z.B. durch die Situationsbildungsvorschrift) bestimmte Muster von der Fahrsituation zumindest vorrangig gebildet.

Insbesondere kann die Situationsbildungsvorschrift zumindest ein erstes Kriterium in Bezug auf die Häufigkeit (auch zu verstehen als ein Maß der Häufigkeit bzw. ein Maß der "Seltenheit") der gemäß der Situationsbildungsvorschrift zu erzeugenden Fahrsituation umfassen. Beispielsweise kann die besagte Situationsbildungsvorschrift eine statistische Häufigkeit betreffend ein Vorkommen von bestimmten Fahrsituationen in der Realität berücksichtigen. Somit können für den realen Straßenverkehr besonders relevante Daten erzeugt werden.

Gemäß einer weiteren Ausgestaltung repräsentieren das eine oder die mehreren virtuellen Objekte und/oder die zumindest eine weitere Gegebenheit eine Anordnung von Verkehrsteilnehmern, insbesondere einen dynamischen Ablauf einer Fahrsituation.

Dies ist auch derart zu verstehen, dass die Datenabschnitte repräsentierend das eine oder die mehreren virtuellen Objekte und/oder die zumindest eine weitere Gegebenheit eine Anordnung von Verkehrsteilnehmern bzw. einen Ablauf einer Fahrsituation repräsentieren, wobei ein oder mehrere Verkehrsteilnehmer der Fahrsituation (jeweils stellvertretend) von dem einen oder den mehreren virtuellen Objekten bzw. von der zumindest einen weiteren Gegebenheit gebildet wird.

Dies kann in einer virtuellen (d.h. auf Basis von Daten repräsentierten, insbesondere - zumindest zunächst - nur auf Basis der Daten bestehenden) Umgebung erfolgen.

Das Verfahren kann dadurch Gegebenheiten, Situationen, Zustände und die entsprechenden (von den Datenabschnitten repräsentierend das eine oder die mehreren virtuellen Objekte abhängigen) Daten erzeugen bzw. verwendbar machen, die besonders praxisrelevant und/oder für die Praxis und/oder gewünschte Sonderfälle in einem bestimmten, gewünschten (auch hohem) Maße repräsentativ sind. Diese können von (sonst typischerweise durch Menschen geplanten bzw. nachgestellten) Tests weitgehend unabhängig sein. Daher kann der Einfluss möglicher menschlicher Fehler auf das endgültige Produkt reduziert werden.

Gemäß einer weiteren Ausgestaltung werden die Datenabschnitte oder die von den Datenabschnitten abhängigen Daten während des Fahrbetriebs eines realen Fahrzeugs, insbesondere aus der Position und/oder Perspektive des realen Fahrzeugs, erzeugt.

Die Datenabschnitte oder die von den Datenabschnitten abhängigen Daten können insbesondere in einem realen Fahrzeug, z.B. mittels einer in dem realen Fahrzeug mitgeführten und/oder mit einem Backend in Wirkverbindung betriebenen Recheneinheit, (laufend) erzeugt werden.

Gemäß einer weiteren Ausgestaltung umfasst das Verfahren ein Erzeugen von Reaktionsdaten, kennzeichnend eine Reaktion des Entwicklungsstandes auf die Datenabschnitte, die das eine oder die mehreren virtuellen Objekte repräsentieren, oder auf die Daten, die abhängig von den Datenabschnitten erzeugt sind; und, insbesondere daraufhin: ein Verwenden der Reaktionsdaten zum Entwickeln, Absichern und/oder Trainieren des Entwicklungsstandes und/oder zum Betreiben des Fahrzeugsystems auf Basis des Entwicklungsstandes.

Gemäß einer weiteren Ausgestaltung sind die Reaktionsdaten kennzeichnend sind für eine Reaktion eines ersten Entwicklungsstandes auf eine Bewegung, ein Verhalten und/oder eine Veränderung eines oder mehrerer virtueller Objekte, und/oder die Reaktionsdaten sind kennzeichnend für eine Reaktion eines ersten Entwicklungsstandes auf eine Bewegung, ein Verhalten und/oder eine Veränderung der einen oder mehreren weiteren Gegebenheiten.

Gemäß einer weiteren Ausgestaltung werden eine Vielzahl von Sätzen der Reaktionsdaten eines Entwicklungsstandes oder bevorzugt mehrerer Entwicklungsstände in Reaktion auf (jeweils) einen oder mehrere Sätze der Datenabschnitte repräsentierend das zumindest eine virtuelle Objekt und/oder der Datenabschnitte (VF1, ..., RO1, ..., VOX, ...) repräsentierend die eine oder die mehreren weiteren Gegebenheiten erzeugt. Bevorzugt kann dies zumindest teilweise gleichzeitig und/oder mittels einer Vielzahl von Prozessorkernen und/oder Prozessoren erfolgen.

Gemäß einer weiteren Ausgestaltung erfolgt eine Verarbeitung einer Vielzahl von Sätzen der Reaktionsdaten, die jeweils auf Basis einer Vielzahl unterschiedlicher Anordnungen, Bewegungen und/oder Verhalten des einen oder der mehreren virtuellen Objekte erzeugt worden sind. Das Ergebnis der Verarbeitung kann daraufhin (unmittelbar oder mit einem weiteren Verarbeitungsschritt) zum Entwickeln, Absichern, Trainieren und/oder Betreiben eines Fahrzeugsystems verwendet werden.

Gemäß einer weiteren Ausgestaltung wird auf Basis der Reaktionsdaten ein Maß einer Performance des Entwicklungsstands und/oder ein Maß einer Empfindlichkeit des Entwicklungsstandes in Bezug auf eine Veränderung eines oder mehrerer Parameter des virtuellen Objekts und/oder der weiteren Gegebenheit ermittelt.

Gemäß einer weiteren Ausgestaltung wird ein Abgleich von auf Basis einer Vielzahl von Sätzen der Reaktionsdaten ermittelten Daten und/oder jeweils erreichter Maße der Performance ausgeführt wobei das Ergebnis des Abgleichs zum Entwickeln, Absichern, Trainieren und/oder Betreiben des Entwicklungsstands oder eines zweiten Entwicklungsstands verwendet wird.

Gemäß einer weiteren Ausgestaltung wird abhängig von den Datenabschnitten und/oder von den Reaktionsdaten ein Trainieren eines neuronalen Netzes des Entwicklungsstands ausgeführt, wobei das Ergebnis des Trainierens zum Update, zur Nachrüstung und/oder zum Betreiben eines Fahrzeugs bereitgestellt und/oder verwendet.

Gemäß einer weiteren Ausgestaltung handelt es sich bei dem Fahrzeugsystem bzw. der Fahrzeugfunktionalität um ein Fahrerassistenzsystem bzw. eine Fahrerassistenz-Fahrzeugfunktionalität und/oder um ein System bzw. eine Funktionalität zur Ausführung oder Unterstützung einer zumindest teilweise automatisierten Längsführung, Querführung und/oder Manöverausführung eines Fahrzeugs, insbesondere um ein zumindest teilweise automatisiertes Fahren und/oder Parken.

Gemäß einer weiteren Ausgestaltung sind die Reaktionsdaten des Entwicklungsstands kennzeichnend für eine Reaktion des Entwicklungsstandes auf einen oder mehrere Einträge aus der folgenden Liste:
- eine teilweise reale und teilweise virtuell modifizierte Umgebung des Fahrzeugs; dies kann die Umgebung des Fahrzeugs sein, die durch die zweiten Datenabschnitte repräsentiert ist;
- auf einen oder mehrere virtuelle Objekte, insbesondere eine Bewegung und/oder ein Verhalten eines virtuellen Objekts; dies können Datenabschnitte sein, die das eine oder die mehreren virtuellen Objekte repräsentieren bzw. durch die diese modifiziert sind;
- auf ein oder mehrere reale Objekte beim Vorhandensein des einen oder der mehreren virtuellen Objekte, insbesondere bei einer bestimmten Bewegung und/oder einem bestimmten Verhalten des einen oder der mehreren virtuellen Objekte.

Beispielsweise können die zweiten Datenabschnitte (auch) eine (temporäre) Verdeckung eines realen Objekts in der Umgebung durch ein virtuelles Objekt repräsentieren bzw. umfassen. Beispielsweise können die modifizierten zweiten Datenabschnitte in der Weise erzeugt werden, dass sie eine Fahrsituation (innerhalb der Umgebung) repräsentieren, bei der ein (in der realen Umgebung des realen Fahrzeugs) nicht vorhandenes Objekt einen Teil der Umgebung des realen Fahrzeugs zumindest teilweise verdeckt und/oder Sensordaten erzeugt, die eine Erkennung des realen Objekts beeinflussen, z.B. stören.

Beispielsweise werden zweite Datenabschnitte erzeugt, die zumindest annähernd den Sensordaten entsprechen, die zumindest einen Bereich der Umgebung (z.B. einen Raumwinkel und/oder ein reales Objekt) repräsentieren, in dem die realen Sensordaten durch ein virtuelles Objekt verändert wären, wenn das virtuelle Objekt real wäre.

Beispielsweise kann ein teilweises Fehlen und/oder eine Veränderung der Daten eines Bereichs der Umgebung zumindest modellhaft nachgebildet werden, welches von einem realen Objekt verursacht worden wäre, wenn es anstelle des virtuellen Objekts ein (entsprechendes) reales Objekt, z.B. mit in etwa gleichen Merkmalen bzw. Parametern wäre.

Abhängig, insbesondere auf Basis von den Reaktionsdaten kann ein Rückschluss auf das reale System des Fahrzeugs gemacht werden, z.B. für den Fall, dass der Entwicklungsstand bzw. ein dem einen oder den mehreren Merkmalen des Entwicklungsstands entsprechendes reale System in einem realen Fahrzeug betrieben würde. Dies kann in Bezug auf die Umgebung des Fahrzeugs, insbesondere für die Fahrsituation in der Umgebung des Fahrzeugs, erfolgen, die teilweise real und teilweise virtuell ist.

Insbesondere kann ein Rückschluss darauf gemacht werden, wie das reale System des Fahrzeugs auf eine bestimmte Bewegung und/oder ein bestimmtes Verhalten eines realen Objekts (mit korrespondierenden Parametern) reagieren würde, insbesondere reagieren würde, wenn der Entwicklungsstand im realen Fahrzeug eingesetzt worden wäre.

Insbesondere kann ein Rückschluss auf die Reaktion in Bezug auf ein oder mehrere erste reale Objekte gemacht werden in dem Fall, wenn andere, zweite reale Objekte vorhanden wären, insbesondere bei einer bestimmten Bewegung und/oder einem bestimmten Verhalten eines oder mehrerer solcher zweiter realer Objekte (die im Verfahren mittels der virtuellen Objekte repräsentiert werden), die in der realen Umgebung des Fahrzeugs in einem realen Fahrbetrieb tatsächlich nicht vorgekommen sind.

Mit der Erfindung kann dies auch in Bezug auf Fahrsituationen erfolgen, die in der realen Umgebung des Fahrzeugs in einem realen Fahrbetrieb nicht vorgekommen sind und insbesondere selten, extrem selten, z.B. mit einer statistischen Wahrscheinlichkeit von geringer als 10⁻⁶, 10⁻⁸, 10⁻¹⁰, 10⁻¹² oder 10⁻¹⁴ pro Kilometer Fahrleistung erwartbar sind und/oder mit einem hohen Risiko oder Schaden verbunden sind. Daher können die Reaktionsdaten bzw. die Rückschlüsse, die durch die Verarbeitung und/oder Nutzung der Reaktionsdaten im Verfahren gewinnbar sind, extrem wertvoll sein (auch da diese sonst nur durch eine extreme Fahrleistung gewinnbar gewesen wären).

Gemäß einer weiteren Ausgestaltung handelt es sich bei den Reaktionsdaten um Daten, die eine Reaktion eines realen Fahrzeugs auf ein dem virtuellen Objekt entsprechendes reales Objekt kennzeichnen. Es kann sich um Reaktionsdaten handeln, die abhängig von dem virtuellen Objekt, insbesondere gemäß einem oder mehreren Parametern des virtuellen Objekts und/oder gemäß einem oder mehreren Parametern der realen Umgebung, die durch die zweiten Datenabschnitte repräsentiert (bzw. von diesem nachgebildet) sind. Alternativ oder zusätzlich kann es sich bei den Reaktionsdaten um Daten handeln, die auf den einen oder die mehreren Parameter des einen oder der mehreren virtuellen Objekte bezogen, insbesondere normiert sind.

Insbesondere repräsentieren die Reaktionsdaten eine Reaktion des realen Systems des Fahrzeugs bzw. des Entwicklungsstands auf den einen oder die mehreren virtuellen Objekte in einer Anordnung mit einem oder mehreren realen Objekten und/oder auf ein oder mehrere reale Objekte in einer Anordnung mit einem oder mehreren virtuellen Objekten. Beispielsweise können die Reaktionsdaten z.B. eine Empfindlichkeit der Reaktion des Entwicklungsstands in Bezug auf einen oder mehrere bestimmte Parameter des einen oder der mehreren virtuellen Objekte, insbesondere in einer Anordnung mit einem oder mehreren realen Objekten und/oder auf ein oder mehrere reale Objekte, insbesondere in einer Anordnung mit einem oder mehreren virtuellen Objekte kennzeichnen.

Als die Empfindlichkeit (z.B. ein Maß, eine Funktion bzw. ein Gradient der Empfindlichkeit) kann eine Veränderung, insbesondere ein Gradient bzw. eine Funktion der Veränderung, der Reaktion des Entwicklungsstands auf eine Veränderung eines Objekts oder eines Parameters eines Objekts, zu verstehen sein.

Beispielsweise kann ein virtuelles Objekt eine Nachbildung eines Verkehrsteilnehmers, z.B. eines Fußgängers, sein. Bei der Verarbeitung und/oder Nutzung der Reaktionsdaten kann (z.B. rechnergestützt) ermittelt werden, ob der Entwicklungsstand in Bezug auf bestimmte Parameter des virtuellen Objekts bzw. Veränderungen bestimmter Parameter des Objekts, insbesondere korrekt, nicht korrekt, angemessen oder nicht angemessen, reagiert.

Beispielsweise können die Reaktionsdaten eine von dem Entwicklungsstand ermittelte Entscheidung, z.B. eine Handlungsentscheidung oder Manöverentscheidung, kennzeichnen. Dies kann eine von einem virtuellen Objekt beeinflusste Entscheidung sein. Beispielsweise können die Reaktionsdaten eine mit Mitteln des Entwicklungsstandes ermittelte (erfolgte bzw. gefällte) Entscheidung kennzeichnen, dem virtuellen Objekt (sozusagen virtuell) auszuweichen, auf das virtuelle Objekt zu bremsen, ein bestimmtes Manöver wegen des Objekts auszuführen, zu verändern und/oder abzubrechen oder eine Kollision mit dem Objekt (z.B. mit einem möglichst geringen Schaden) auszuführen.

Die Reaktionsdaten können z.B. Parameter einer entsprechenden Bahnplanung (auch zu verstehen als Trajektorienplanung) bzw. einer Ausweichkurve, einer Bremskraft oder einer Information, wie z.B. einer Anzeige bzw. Ansage des Fahrzeugs für den Nutzer des Fahrzeugs, etc. kennzeichnen.

Die Reaktionsdaten können einen oder mehrere Betriebsparameter des Systems des Fahrzeugs (z.B. einer Sensorik, eines Steuergeräts, etc.) kennzeichnen, die auf Basis der modifizierten Situation ermittelt werden. Alternativ oder zusätzlich können die Reaktionsdaten (z.B. im Wesentlichen nur) einen Unterschied zwischen der Reaktion des Systems des Fahrzeugs auf die mit dem einen oder den mehreren virtuellen Objekten modifizierte Situation in der Umgebung des Fahrzeugs gegenüber der realen Situation des Fahrzeugs angeben.

Gemäß einer weiteren Ausgestaltung wird eine Vielzahl von Sätzen der Datenabschnitte repräsentierend ein oder mehrere virtuelle Objekte, von Fahrsituationen und/oder Reaktionsdaten erzeugt. Dies kann insbesondere zumindest teilweise gleichzeitig und/oder mittels einer Vielzahl von Prozessorkeren und/oder Prozessoren (bevorzugt im Backend) erfolgen. Zumindest teilweise gleichzeitig kann z.B. quasigleichzeitig bzw. innerhalb eines kurzen Zeitintervalls sein.

Beispielsweise wird im Backend zunächst aus einem Satz von ersten Datenabschnitten (die aufgrund einer ersten und/oder zweiten Trigger-Bedingung und bei einer realen Umgebung eines realen Fahrzeugs erfasst worden sind) eine Vielzahl (z.B. 10², 10⁴, 10⁵, 10⁶ ...) von Sätzen zweiter Datenabschnitte, die z.B. ein oder mehrere virtuelle Objekte umfassen, erzeugt. Diese Rechenaufgabe kann auf eine Vielzahl von Prozessorkernen und/oder Prozessoren verteilt werden, die die jeweiligen Rechenaufgaben bevorzugt im Wesentlichen parallel verarbeiten. Es ergibt sich ein besonderer Vorteil, da zumindest die meisten unterschiedlichen Reaktionen des Entwicklungsstands auf unterschiedlich modifizierte reale Umgebungen (bzw. Fahrsituationen) etwa ähnliche Verarbeitungszeit erfordern. Dabei kann ein entsprechendes, eine Vielzahl von parallel betriebenen Entwicklungsständen umfassendes stationäres System besonders effizient betrieben werden.

Bevorzugt wird zum Erzeugen und/oder Abgleich der Datenabschnitte repräsentierend ein oder mehrere virtuelle Objekte, von Fahrsituationen und/oder der Reaktionsdaten (auch zu verstehen als Daten auf Basis der Reaktionsdaten) eine Vielzahl von gleichen oder unterschiedlichen Entwicklungsständen verwendet. Bevorzugt können ein Entwicklungsstand oder mehrere Entwicklungsstände vielfach, z.B. auf einer Vielzahl von Prozessoren oder Prozessorkernen, emuliert werden. Beispielsweise kann eine Vielzahl von Entwicklungsstände als (mehr oder minder separate und/oder zeitgleich bzw. parallel betreibbare) elektronische Module verwendet werden, welche die (zum Ermitteln der Reaktionsdaten besonders relevanten) Merkmale eines realen Systems des Fahrzeugs aufweisen.

Alternativ oder zusätzlich können Entwicklungsstände als Prototypen des Fahrzeugsystems eine Hardware, z.B. als ein sogenanntes A-Muster, B-Muster, C-Muster, D-Muster bzw. seriennahes Steuergerät oder ein Seriensteuergerät aufweisen und/oder es kann eine zu dem jeweiligen Entwicklungsstand gehörende Software mittels der Prototypen betrieben werden. Die Entwicklungsstände können (z.B. in einem sogenannten Closed-Loop-Betrieb) mit einer zumindest teilweise realen und/oder einer zumindest teilweise virtuellen Hardware und/oder Aktoren betrieben werden.

Besonders bevorzugt werden die Sätze der zweiten Datenabschnitte, die auf Basis eines Satzes der ersten Datenabschnitte erzeugt wurden, auf eine Vielzahl der (z.B. zu dem Backend gehörenden) Entwicklungsstände verteilt. Beispielsweise können ein Entwicklungsstand oder bevorzugt eine Vielzahl der Entwicklungsstände mit jeweils unterschiedlichen, insbesondere quantitativ und/oder qualitativ unterschiedlichen, Sätzen der zweiten Datenabschnitten betrieben werden.

Bevorzugt kann eine Vielzahl der zweiten Datenabschnitte (auch zu verstehen als: Sätzen der zweiten Datenabschnitte), die eine mit einem oder mehreren der virtuellen Objekte quantitativ und/oder qualitativ unterschiedlich modifizierte Umgebung bzw. Fahrsituation des Fahrzeugs repräsentieren, auf eine Vielzahl der Kopien eines Entwicklungsstandes des Systems des Fahrzeugs aufgeteilt werden. Mit anderen Worten kann in einem Backend eine Vielzahl der zweiten Datenabschnitte, die einer Vielzahl der jeweiligen Varianten einer Umgebung des Fahrzeugs und/oder Varianten einer Fahrsituation entsprechen, zu einem (bevorzugt im Wesentlichen gleichzeitigen) Betrieb einer Vielzahl der Kopien des Entwicklungsstandes verwendet werden. Die zweiten Datenabschnitte können als Input an eine Vielzahl der emulierten Entwicklungsstände (z.B. im Wesentlichen parallel) verwendet werden.

Mit dem erfindungsgemäßen Verfahren kann die Entwicklung, die Absicherung, das Trainieren und/oder das Betreiben eines Fahrzeugsystems z.B. um den Faktor 10², 10⁴, 10⁵ oder sogar 10⁶ beschleunigt werden bzw. entsprechend effektiver und/oder sparsamer erfolgen.

Gemäß einer weiteren Ausgestaltung wird eine Verarbeitung einer Vielzahl von Fahrsituationen und/oder Reaktionsdaten auf Basis einer Vielzahl der Datenabschnitte, die insbesondere durch das Modifizieren eines Satzes der Datenabschnitte repräsentierend ein oder mehrere virtuelle Objekte erzeugt wurden, ausgeführt. Es kann sich um eine Vielzahl von (jeweils voneinander unterschiedlichen) zweiten Datenabschnitten handeln. Es kann eine Vielzahl der jeweils auf Basis eines Satzes der ersten Datenabschnitte ermittelten zweiten Datenabschnitten sein. Dabei kann zu einer Vielzahl der ersten Datenabschnitte jeweils eine Vielzahl der zweiten Datenabschnitte ermittelt werden. Das Ergebnis der Verarbeitung, insbesondere eine (ggf. extreme) Vielzahl der (entsprechenden) Reaktionsdaten sowie darauf basierter Ergebnisse oder Verwendungen kann zur Entwicklung, zur Absicherung, zum Trainieren und/oder zum Betreiben eines Fahrzeugsystems verwendet werden.

Die Verarbeitung kann gemäß einem bestimmten mathematischen Zusammenhang (z.B. einer Regel, einer Formel, einem Koeffizienten einer vorausbestimmten Formel, etc.) erfolgen. Es kann eine Verarbeitung (auch zu verstehen als Verrechnung) der unterschiedlichen Sätze der zweiten Reaktionsdaten untereinander vorgesehen sein. Bevorzugt kann die Verarbeitung die Ausführung einer oder mehrerer statistischer Operationen umfassen. Das Ergebnis der Verarbeitung kann eine, insbesondere für die Vielzahl der Reaktionsdaten geltende, statistische Information sein.

Bevorzugt umfasst die Verarbeitung ein Ermitteln einer Performance, z.B. eines Maßes der Performance, z.B. kennzeichnend ein oder mehrere Performancemerkmale, z.B. von einem oder mehreren KPIs (= Key Performance Indikatoren) für die jeweiligen Reaktionsdaten. Dabei kann aus der ermittelten Performance ein Rückschluss auf ein Performancemerkmal (KPI) des Entwicklungsstands bzw. des diesen umfassenden bzw. auf diesem basierenden Fahrzeugsystems gemacht werden. Die ermittelte Performance kann kennzeichnend sein für den Fall, dass dieser in einem realen Fahrzeug in einer vergleichbaren Umgebung und/oder Fahrsituation agieren würde, wie diese durch das eine oder die mehreren virtuellen Objekte (in den zweiten Datenabschnitten) repräsentiert wird.

Gemäß einer weiteren Ausgestaltung wird auf Basis der Reaktionsdaten ein Maß einer Performance des Entwicklungsstands und/oder ein Maß einer Empfindlichkeit des Entwicklungsstandes gegenüber einer Veränderung eines Parameters des virtuellen Objekts ermittelt.

Gemäß einer weiteren Ausgestaltung wird ein Abgleich von auf Basis der Reaktionsdaten ermittelten Daten ausgeführt, wobei es sich bei den Daten um Daten auf Basis einer Vielzahl der zweiten Datenabschnitte (der Sätze der zweiten Datenabschnitte) oder ein jeweils erreichtes Maß einer Performance handelt.

Gemäß einer weiteren Ausgestaltung wird auf Basis der zweiten Datenabschnitte ein Trainieren eines neuronalen Netzes des (ersten bzw. zweiten) Entwicklungsstands ausgeführt. Das Ergebnis des Trainierens kann zum Update, zur Nachrüstung und/oder zum Betreiben eines realen Fahrzeugs, insbesondere eines dem realen Fahrzeug ähnlichen Fahrzeugs oder eines gegenüber dem realen Fahrzeug weiterentwickelten Fahrzeugs bereitgestellt und/oder verwendet werden.

Das Ergebnis des Trainierens umfasst oder ist bevorzugt ein Teil eines sogenannten Checkpoints des trainierten neuronalen Netzes. Ein Checkpoint kann insbesondere die Gewichte (auch zu verstehen als Gewichtsinformationen) und/oder Bias-Terms des (bis zu einem bestimmten Stadium bzw. hinreichend) trainierten neuronalen Netzes sein oder umfassen.

Dabei kann zumindest ein Bestandteil des trainierten neuronale Netzes (auch zu verstehen als: ein oder mehrere sogenannte Checkpoints) in einen nächsten Entwicklungsstand, insbesondere in ein reales System eines Fahrzeugs zumindest teilweise übernommen werden.

Gemäß einer weiteren Ausgestaltung handelt es sich bei dem Fahrzeugsystem des realen Fahrzeugs (zu verstehen auch als: bei dem Fahrzeugsystem, auf welches sich der erste Entwicklungsstand bezieht, und/oder bei dem Fahrzeugsystem, auf welches sich der zweite Entwicklungsstand bezieht, und/oder bei einem Fahrzeugsystem des realen Fahrzeugs, welches beim Ermitteln des oder der ersten Datenabschnitte verwendet wird) um ein Fahrerassistenzsystem und/oder um ein System zum Ausführen oder zur Unterstützung einer zumindest teilweise automatisierten Längsführung, Querführung und/oder eines Manövers (z.B. eines Fahrmanövers, Parkmanövers oder Rangiermanövers) eines Fahrzeugs. Insbesondere kann es sich um ein System zum zumindest teilweise automatisierten Fahren und/oder Parken handeln. Beispielsweise können auf Basis der ersten Datenabschnitte einer realen Umgebung eines oder mehrerer realen Fahrzeuge (wobei die reale Umgebung an sich z.B. vergleichsweise gewöhnlich oder ungefährlich ist bzw. keine kritische Situation birgt) zweite Datenabschnitte sowie Reaktionsdaten des Entwicklungsstands (somit ggf. auch des entsprechenden realen Systems des Fahrzeugs) ermittelt werden, die sich bei einer Veränderung bzw. einer Variante der Umgebung bzw. der in der Umgebung vorherrschenden Situation ergeben würden.

Beispielsweise kann ermittelt werden, wie ein Entwicklungsstand auf einen Verkehrsteilnehmer (mit einer bestimmten Eigenschaft, mit einer bestimmten Bewegung und/oder einem bestimmten Verhalten) reagieren würde, falls ein solcher innerhalb der realen Umgebung des realen Fahrzeugs erscheinen würde.

Beispielsweise können Daten auf Basis der Reaktionsdaten eines Entwicklungsstands (oder des realen Systems, z.B. eines Fahrerassistenzsystems und/oder eines Sicherheitssystems) auf zweite Datenabschnitte ermittelt, verarbeitet bzw. verwendet werden, die eine teilweise reale und teilweise virtuelle Umgebung des Fahrzeugs repräsentieren, in der z.B. ein Kind, Fahrradfahrer oder Fußgänger plötzlich erscheinen und/oder sich auf eine bestimmte Art und Weise bewegen bzw. verhalten würde.

Gemäß einer weiteren Ausgestaltung erfolgt zum Ermitteln der ersten Datenabschnitte eine Aktivierung oder eine Veränderung eines Betriebsmodus und/oder Ansteuerung:
- eines Sensors und/oder
- einer Verarbeitung der Sensordaten (z.B. durch Ansteuerung einer Vorrichtung zum Verarbeiten der Sensordaten, z.B. eines Umfeldmodells), und/oder
- eines realen Systems.

Dies kann z.B. abhängig von der zumindest einen Trigger-Bedingung (in einem oder mehreren realen Fahrzeugen, insbesondere in dem realen Fahrzeug) erfolgen.

Besonders bevorzugt kann die Aktivierung eine Veränderung eines Betriebsmodus und/oder eine Ansteuerung (des zumindest einen Sensors und/oder einer Verarbeitung der Sensordaten und/oder des realen Systems) ausgeführt werden, die nicht für den Betrieb, insbesondere Fahrbetrieb des konkreten realen Fahrzeugs notwendig und/oder sinnvoll sind. Die Aktivierung oder Veränderung eines Betriebsmodus und/oder Ansteuerung (des zumindest einen Sensors und/oder einer Verarbeitung der Sensordaten und/oder des realen Systems) können ohne eine Notwendigkeit, einen funktionalen Nutzen und/oder einen Kundennutzen in dem realen Fahrzeug, z.B. auch ohne Nutzen für das konkrete reale Fahrzeug oder seinen Betrieb erfolgen.

Beispielsweise kann eine Aktivierung oder eine Veränderung der Parameter, des Betriebsmodus eines Sensors, der Verarbeitung der Sensordaten und/oder eines realen Systems des Fahrzeugs, insbesondere umfassend eine Funktionslogik, erfolgen. Beispielsweise kann abhängig von der Trigger-Bedingung die Modellierung des Umfelds des Fahrzeugs und/oder ein Parameter oder eine Logik einer Kundenfunktion oder einer Systemfunktion verändert werden. Mit anderen Worten kann abhängig vom Zutreffen der Trigger-Bedingung eine Veränderung im Fahrzeug bewirkt werden, um (z.B. gewünschte, besonders geeignete) erste Datenabschnitte zu ermitteln.

Es kann sich z.B. um ein reales System handeln, das mit dem Entwicklungsstand korrespondiert, z.B. für welches der Entwicklungsstand dient.

Durch die Erfindung können diverse erhebliche Vorteile hinsichtlich Kosten und Aufwand bei der Entwicklung und Markteinführung von modernen Fahrzeugen erreicht werden. Beispielsweise kann die Funktionalität, die Performance und/oder die Sicherheit des Entwicklungsstands sowie des auf dem Entwicklungsstand basierenden resultierenden Systems des Fahrzeugs erhöht werden.

Das Entwickeln, Erproben, Absichern und Trainieren von Fahrzeugen kann schneller erfolgen und mit weniger Kosten und Risiken verbunden sein.

Es kann eine extrem große Menge (und/oder Anzahl von Varianten) von Daten, z.B. zum Trainieren eines neuronalen Netzes, gewonnen werden. Darunter können auch Daten zu Fahrsituationen sein, die sonst meistens nur durch äußerst gefährliche Fahrsituationen ermittelbar wären.

Fahrzeugsysteme bzw. Fahrzeuge können dadurch auch für oder mit Situationen und/oder Eigenschaften, Bewegungen und/oder einem Verhalten von Objekten, die in der Realität sehr selten vorkommen und/oder unerwünscht sind, entwickelt und ggf. trainiert werden.

Nachteile sowie Schäden, die bei der Entwicklung, der Absicherung und im Betrieb der Fahrzeuge (sowohl betreffend eine Versuchsflotte als auch eine Kundenflotte) auftreten können, können stark reduziert werden.

Weitere Vorteile sind:
- Weniger Risiko für Dritte bzw. für die Gesellschaft;
- weniger Kosten bzw. Verbrauch von Ressourcen, insbesondere Fahrzeugen;
- eine Absicherung und/oder ein Trainieren der Fahrzeuge mit weniger Fahrleistung.

Es kann eine Verkürzung der Entwicklungszyklen, insbesondere bei der Entwicklung des automatisierten Fahrens, erreicht werden.

Durch das Verfahren können (in einer besonders effizienten Art und Weise) die Persönlichkeitsrechte der Halter der jeweiligen realen Fahrzeuge sowie der realen Objekte (z.B. im Vergleich mit einer denkbaren Aufzeichnung extrem langer Fahrstrecken von einer Versuchsflotte) wesentlich besser berücksichtigt werden. Dies begründet sich z.B. mit einer aus den Beispielen des Verfahrens resultierenden sehr starken Reduktion der zu erfassenden Daten, der Form der Daten, sowie damit, dass die jeweils erfassten Daten (z.B. im Wesentlichen nur) tatsächlich der Entwicklung eines verbesserten Produkts bzw. Dienstleistung dienen und/oder kaum kritische oder überflüssige Daten erfasst werden müssen. Ferner kann das Verfahren auch weitere Maßnahmen umfassen, wobei bei den Maßnahmen Informationen kodiert oder anonymen Identifikatoren zugeordnet und/oder mit anonymen Identifikatoren verarbeitet werden, derart, dass personenbezogene oder personenbeziehbare Daten bei oder nach der Verwendung der Daten nicht oder extrem schwer rekonstruierbar sind.

Ferner können Bedenken von Gremien der Politik sowie in der Öffentlichkeit gegen automatisierte Fahrzeuge abgebaut werden, z.B. auch durch eine bessere Absicherung und Voraussagbarkeit der Fahrzeuge. Insbesondere kann dies dadurch erfolgen, dass das Ergebnis des Betriebs zumindest teilweise automatisiert fahrbarer Fahrzeuge, z.B. bestimmte Maße der Performance und/oder eines Risikos, abhängig von Reaktionsdaten geschätzt bzw. prädiziert werden können.

Außerdem kann sich ein erheblicher Vorteil betreffend die Umweltverträglichkeit der Entwicklung, Absicherung bzw. Markteinführung der Fahrzeuge ergeben, da eine sehr große (extreme) sonst erforderliche Laufleistung von Versuchsfahrzeugen mittels der Erfindung zumindest teilweise entfallen bzw. ersetzt werden kann.

Gemäß einem zweiten Aspekt umfasst die Erfindung ein System zum Entwickeln, Absichern, Trainieren und/oder Betreiben eines Fahrzeugsystems oder einer Fahrzeugfunktionalität.

Das System ist eingerichtet zum: Erzeugen von Datenabschnitten repräsentierend ein oder mehrere virtuelle Objekte die jeweils stellvertretend sind für eine oder mehrere bewegliche und/oder veränderliche Gegebenheiten; und daraufhin zum Verarbeiten der Datenabschnitte repräsentierend das eine oder die mehreren virtuellen Objekte oder abhängig von den Datenabschnitten ermittelter Daten zum Entwickeln, Absichern, Trainieren eines Entwicklungsstandes des Fahrzeugsystems oder der Fahrzeugfunktionalität.

Das System kann ein oder mehrere reale Fahrzeuge, insbesondere Fahrzeuge aus einer sogenannten Kundenfahrzeug- und/oder Versuchsflotte, und ein Backend umfassen. Diese können zu einer entsprechenden Wirkverbindung eingerichtet sein. Beispielsweise kann das Backend, insbesondere in einer Wirkverbindung mit einem oder mehreren realen Fahrzeuge zum Ausführen zumindest eines Teils des Verfahrens, insbesondere zum Erzeugen der oben im Zusammenhang mit Ausführungsformen des erfindungsgemäßen Verfahrens erwähnten zweiten Datenabschnitte, der Reaktionsdaten, und/oder zum Verwenden der Reaktionsdaten (gemäß einem oder mehreren Merkmalen des Verfahrens) eingerichtet sein.

Gemäß einem weiteren Aspekt umfasst die Erfindung zumindest ein Computerprogramm, insbesondere ein Computerprogrammprodukt umfassend ein Computerprogramm. Das eine oder die mehreren Computerprogramme sind ausgebildet ist, bei ihrer Ausführung auf zumindest einer Recheneinheit das in diesem Dokument beschriebene Verfahren (zu verstehen auch als: einen jeweiligen Teil des Verfahrens) auszuführen.

Das Computerprogrammprodukt kann als ein Update eines bisherigen Computerprogramms ausgebildet sein, welches beispielsweise im Rahmen einer Funktionserweiterung, beispielsweise im Rahmen eines sogenannten "Remote Software Update" die Teile des Computerprogramms bzw. des entsprechenden Programmcodes umfasst. Das Computerprogrammprodukt umfasst insbesondere ein von der Datenverarbeitungsvorrichtung lesbares Medium, auf dem der Programmcode gespeichert ist, oder zumindest eine verschlüsselte Datei. Gemäß einem weiteren Aspekt wird ein Programmprodukt beschrieben, das ein autorisiertes Zugriffsrecht auf abgelegte Daten des Computerprogrammprodukts umfasst.

Gemäß einem weiteren Aspekt umfasst die Erfindung ein (reales) Fahrzeug, wobei das Fahrzeug unmittelbar oder mittelbar abhängig von den ermittelten Daten gestaltet, aktualisiert und/oder betrieben wird.

Der Begriff "Fahrzeug" im Rahmen dieses Dokuments ist insbesondere als ein Kraftfahrzeug zu verstehen, insbesondere ein PKW, ein LKW, ein Zweirad, z.B. Motorrad, oder ein Fahrrad. Beispielsweise können ein oder mehrere reale Fahrzeuge Kraftfahrzeuge sein, die insbesondere für einen für Kraftfahrzeuge der vorstehend genannten Art typischen Fahrbetrieb (z.B. Kundenbetrieb, z.B. auf öffentlichen Straßen) eingerichtet sein können.

Alternativ oder zusätzlich kann es sich bei dem realen Fahrzeug um ein Spezialfahrzeug, ein ferngesteuertes Fahrzeug, ein von einem Kraftfahrzeug abweichendes Fahrzeug, ein Wasserfahrzeug, ein Luftfahrzeug, ein landwirtschaftliches Fahrzeug, eine Maschine zum Ausführen von Erdbewegungen oder zur Förderung von (z.B. fossilen) Rohstoffe oder um eine Baumaschine handeln.

Gemäß einem weiteren Aspekt betrifft die Erfindung einen Entwicklungsstand eines, insbesondere zumindest teilweise automatisiert fahrbaren, Fahrzeugsystems, welcher gemäß den Merkmalen der Erfindung entwickelt, abgesichert, trainiert und/oder betrieben wird.

Insbesondere gehört hierzu ein Stand eines trainierten neuronalen Netzes, z.B. in Form von Daten eines Checkpoints und/oder Bias-Terms des Entwicklungstandes. Ein solcher Entwicklungsstand kann z.B. als ein Update bzw. Upgrade (auch nachträglich) an Fahrzeuge übermittelt (ausgerollt) bzw. in den Fahrzeugen verwendet werden.

Die Erfindung wird nachfolgend ohne Einschränkung der Allgemeinheit anhand einiger kombinierbarer Ausführungsbeispiele beschrieben. Es wird darauf hingewiesen, dass alle in der vorliegenden Beispielbeschreibung beschrieben Merkmale untereinander und/oder mit den oben beschriebenen Merkmalen kombinierbar sind.

Zunächst folgt die Beschreibung einiger von mehreren möglichen Varianten des Verfahrens. Dies erfolgt insbesondere in einer chronologischen und/oder kausalen Reihenfolge:
Es erfolgt ein Erzeugen der Datenabschnitte virtueller Objekte. Dabei können ein oder mehreren Parameter des virtuellen Objekts kennzeichnend sein für ein oder mehrere Elemente aus der folgenden Auflistung:
- seine aktuelle Eigenschaft und/oder sein aktuelles Verhalten;
- seine Position, seine Abmessungen und/oder seine Bewegung;
- seine Wahrnehmung (z.B. ein von dem Objekt einsehbarer Raumbereich und/oder das, was das Objekt aus seiner Perspektive wahrnehmen kann);
- eine Aktion und/oder eine Einwirkung des virtuellen Objekts gegenüber dem Fahrzeug und/oder gegenüber einem weiteren realen Objekt;
- eine Aktion des Fahrzeugs und/oder eines weiteren realen Objekts mit Bezug auf das virtuelle Objekt;
- eine Einwirkung eines weiteren realen Objekts und/oder des Fahrzeugs auf das virtuelle Objekt.

Die Parameter des virtuellen Objekts können mit dem virtuellen Objekt, insbesondere mit den Aktionen des virtuellen Objekts zusammenhängende Parameter sein.

Mit anderen Worten kann eine reale Situation z.B. modellhaft durch das eine oder die mehreren virtuellen Objekte (die z.B. bestimmte bzw. sich auf bestimmte Art und Weise verhaltende Verkehrsteilnehmer nachbilden) modifiziert (auch zu verstehen als: gezielt bzw. in eine gewünschte Richtung verändert) werden. Die virtuellen Objekte können dabei dynamisch sein, über ein bestimmtes Verhalten und/oder Interaktionsparameter verfügen, etc. Abhängig von den virtuellen Objekten werden die Datenabschnitte, die dem virtuellen Objekt entsprechen und/oder Datenabschnitte der modifizierten Situation in der Umgebung des Fahrzeugs ermittelt.

Beispielsweise werden im Rahmen der genannten Modifikation zu den Datenabschnitten (z.B. gemäß einer vorausbestimmten Abhängigkeit und/oder zumindest teilweise nach einem Zufallsprinzip) virtuelle Objekte hinzugefügt. Ein virtuelles Objekt steht dabei z.B. für ein Objekt, das es in der realen Situation nicht (zumindest nicht mit dem Parameter des virtuellen Objekts oder gar nicht) gegeben hat.

Die virtuellen Objekte können von einem bestimmten Typ sein, z.B. ein Objekt einer bestimmten Art bzw. Klasse nachbilden. Beispielsweise können diese einem Verkehrsteilnehmer einer bestimmten Klasse entsprechen bzw. dieses, z.B. hinsichtlich seines Verhaltens und/oder seiner Einwirkung auf das System des Fahrzeugs, nachbilden.

Auch kann ein virtuelles Objekt durch ein zumindest teilweise zufällig bestimmtes Verhalten und/oder eine zumindest teilweise zufällige Einwirkung auf das Fahrzeug bzw. ein System des Fahrzeugs gekennzeichnet sein.

Beispielsweise kann ein virtuelles Objekt als Einwirkungsdaten, ein oder mehrere Maße seiner Einwirkung auf ein System des Fahrzeugs kennzeichnen und/oder als entsprechende Daten eines das Umfeld des Fahrzeugs erfassenden Sensors bzw. entsprechende Daten einer Fahrzeugfunktion erzeugt werden. Beispielsweise kann ein virtuelles Objekt durch Daten repräsentiert werden, die kennzeichnend sind für ein Abbild des (entsprechenden) Objekts in den Daten des Systems des Fahrzeugs, z.B. in den rohen, vorverarbeiteten oder interpretierten Sensordaten.

Das Ergebnis kann sozusagen ein Abbild der Situation in der Umgebung des Fahrzeugs und/oder die entsprechenden Daten des Systems des Fahrzeugs kennzeichnen, wobei diese mittels eines oder mehrerer virtueller Objekte modifiziert werden.

Es kann sich um ein oder mehrere virtuelle Objekte handeln, die sich (virtuell) außerhalb des Fahrzeugs befinden. Diese können (als entsprechende Datenabschnitte) zu den die reale Situation repräsentierende Daten hinzugefügt und/oder mit diesen (in einer zweckmäßigen Art und Weise) verrechnet werden.

Alternativ oder zusätzlich kann ein Objekt oder eine Anzahl der Objekte (auch zu verstehen als Datenabschnitte, die mit den Objekten korrespondieren), das bzw. die es in der besagten realen Situation gegeben hat, zumindest teilweise entfernt und/oder durch das eine oder die mehreren virtuellen Objekte ersetzt werden.

Beispielsweise können in den Datenabschnitten, die einer realen Umgebung bzw. Situation entsprechen, Daten kennzeichnend einen realen (sich normal verhaltendem) Fußgänger zumindest teilweise entfernt und/oder zumindest teilweise durch Daten eines virtuellen Fußgängers oder eines Fußgängers mit einem veränderten Verhalten, einen anderen Verkehrsteilnehmer, wie z.B. einen Skateboard-Fahrer, ein Tier oder ein Kind, ersetzt werden.

Wahlweise kann ein Parameter eines (realen) Verkehrsteilnehmers verändert werden. Beispielsweise kann ein Parameter seines Verhaltens oder seiner Reaktion, wie z.B. seiner Reaktionsfähigkeit verändert werden. Die entsprechend modifizierten Daten würden einer veränderten Situation in der Umgebung des Fahrzeugs (sozusagen einer parallelen Realität) entsprechen, in der die Situation sich anders entwickelt.

Das virtuelle Objekt gilt, wirkt bzw. bewegt sich dabei innerhalb einer simulierten Umgebung (jenseits des realen Fahrzeugs, welches tatsächlich die zugrundeliegende Situation erfährt bzw. erfahren hat). Beispielsweise kann ein virtuelles Objekt ein Merkmal einer Videospielfigur aufweisen bzw. etwa vergleichbar gestaltet sein.

Beispielsweise kann das virtuelle Objekt ein (gestaltbares, veränderliches, konfigurierbares oder programmierbares) Objekt sein, wie z.B. ein aktives Objekt aus einem guten Videospiel. Solche virtuellen Objekte können in einer Nachbildung einer realen Umgebung und/oder einer realen Situation auf Basis der von einem realen Fahrzeug übermittelten Datenabschnitte eingesetzt werden.

Gemäß einem Ausführungsbeispiel werden die oben erwähnten zweiten Datenabschnitte, die eine modifizierte Umgebung, insbesondere eine modifizierte Fahrsituation repräsentieren, an das Backend (z.B. an ein stationäres System im Backend) bereitgestellt. Dabei wird das stationäre System mit den zweiten Datenabschnitten betrieben. Dabei wird einer Vielzahl von Entwicklungsständen (jeweils) eine (unterschiedlich) modifizierte Realität sozusagen vorgespielt bzw. "vorgegaukelt". Diese Entwicklungsstände werden veranlasst, auf die (jeweiligen) zweiten Datenabschnitte (jeweils) zu reagieren, insbesondere zu agieren, z.B. eine Entscheidung zu treffen, Daten für eine (veränderte) Planung der Führung des Fahrzeugs zu ermitteln. Dadurch werden die Reaktionsdaten gewonnen.

Das stationäre System kann eine Vielzahl von Entwicklungsständen umfassen. Diese wiederum können mehrere Kopien eines Entwicklungsstands, mehrere unterschiedliche Varianten (z.B. Parametrierungen) eines Entwicklungsstands oder prinzipiell unterschiedliche Entwicklungsstände sein.

Die resultierenden (modifizierten) zweiten Datenabschnitte (die insbesondere eine modifizierte Umgebung des Fahrzeugs repräsentieren) werden, insbesondere in einer stationären Umgebung, z.B. innerhalb einer Simulation, verarbeitet, insbesondere reprozessiert. Beispielweise kann ein stationär betriebenes System des Fahrzeugs (mit derselben Software und/oder einer alternativen Software) mit den modifizierten Daten betrieben werden. Alternativ können Recheneinheiten, die das System des Fahrzeugs emulieren (vereinfacht: nachbilden) mit den modifizierten Daten betrieben werden.

Beispielsweise können mit den modifizierten Daten Einheiten, die auf Basis von (handelsüblichen oder angepassten) Spielkonsolen und/oder Grafikkarten (zu verstehen auch als Recheneinheiten von bzw. für Spielkonsolen bzw. Grafikkarten) betrieben werden. Dabei kann auf den Spielkonsolen (eine extreme Vielzahl) der Situationen sozusagen virtuell durchgespielt werden, die es so nicht gegeben hat.

Dabei können die (virtuellen bzw. auf der modifizierten Realität basierenden) Reaktionsdaten zumindest eines (z.B. nur stationär betriebenen) Systems des Fahrzeugs ermittelt werden. Insbesondere repräsentieren die virtuellen Reaktionsdaten eine Reaktion eines (z.B. in einem stationären Rechner) emulierten Systems des Fahrzeugs auf die Daten, die eine mittels zumindest eines virtuellen Objekts modifizierte Situation repräsentieren. Unter dem Begriff "Fahrzeugsystem" kann im Wesentlichen das gleiche System wie ein in einem (oder dem) realen Fahrzeug verbautes System, ein alternatives, weiterentwickeltes und/oder ein zu trainierendes System verstanden werden.

Diese Reaktionsdaten können (zumindest annähernd) den Reaktionsdaten eines realen Fahrzeugs entsprechen, die in einer realen Situation, die den mit den virtuellen Objekten modifizierten Daten entspricht, erzeugt würden. Die Reaktionsdaten können also z.B. den Reaktionsdaten eines realen Fahrzeugs entsprechen, die erzeugt würden, wenn die virtuellen Objekte in der realen Situation vorkämen.

Als Reaktionsdaten sind im Rahmen dieses Dokuments (auch) beliebige Betriebsdaten des Systems des Fahrzeugs, die durch das Einfügen des virtuellen Objekts bzw. durch das Modifizieren der ersten Datenabschnitte entstehen bzw. beeinflusst werden, zu verstehen.

Abhängig von den Reaktionsdaten können (besonders für das automatisierte Fahren) sehr wertvolle weitere Schritte ausgeführt werden. Siehe dazu die Vorteile der Erfindung.

Gemäß einem Ausführungsbeispiel erfolgt ein Ermitteln, insbesondere Erfassen und Speichern, von Reaktionsdaten der Vielzahl der Entwicklungsstände, kennzeichnend (jeweils) eine Reaktion eines jeweiligen Entwicklungsstands auf die zweiten Datenabschnitte.

Beispielsweise können die Reaktionsdaten eine Entscheidung kennzeichnen, dem virtuellen Objekt (virtuell) auszuweichen, auf das virtuelle Objekt zu bremsen, ein bestimmtes Manöver auszuführen oder eine Kollision mit dem Objekt (z.B. mit einem möglichst geringen Schaden) auszuführen. Die Reaktionsdaten können z.B. Parameter einer entsprechenden Bahnplanung (Trajektorienplanung) bzw. eine Ausweichkurve, eine Bremskraft, eine Anzeige des Fahrzeugs für den Nutzer des Fahrzeugs etc. kennzeichnen. Die Reaktionsdaten können einen oder mehrere Betriebsparameter des Systems des Fahrzeugs (z.B. der Sensorik, der Steuergeräte, etc.) kennzeichnen, die auf Basis der modifizierten Fahrsituation ermittelt werden oder (z.B. im Wesentlichen nur) einen Unterschied zwischen der Reaktion des Systems des Fahrzeugs auf die mit dem einen oder mehreren virtuellen Objekten modifizierte Situation in der Umgebung des Fahrzeugs und der Reaktion des Systems des Fahrzeugs auf die reale Situation. Die Reaktionsdaten können eine Kombination der Reaktion des Fahrzeugs auf die reale Umgebung und auf Bedingungen und/oder Situationen kennzeichnen, die mit dem virtuellen Objekt (d.h. einem virtuell vorhandenen Teil der Gesamtrealität) ergänzt, verändert bzw. angereichert wurden.

Beispielsweise kennzeichnen die Reaktionsdaten eine Reaktion des Entwicklungsstands auf das virtuelle Objekt oder eine Interaktion mit dem Objekt, wobei zumindest eine Reaktion des Objekts auf das Fahrzeug simuliert wird.

Dabei können Reaktionsdaten gewonnen (ermittelt) werden, die ein reales Fahrzeug in der realen Umgebung, die durch ein oder mehrere virtuelle Objekte modifiziert wurde, mit einem dem Entwicklungsstand entsprechenden System des Fahrzeugs erzeugen würde. Die zumindest eine Reaktion des Objekts kann wiederum beim Ermitteln eines Parameters der Reaktion des Fahrzeugs (auf die Reaktion des Objekts) berücksichtigt werden.

Gemäß einem Ausführungsbeispiel werden die Reaktionsdaten (auch zu verstehen als Daten auf Basis der Reaktionsdaten), insbesondere aus einer Vielzahl der Sätze der Reaktionsdaten, bereitgestellt und/oder verwendet für einen oder mehrere Einträge aus folgender Liste:
- zum Test und/oder zur Absicherung eines Entwicklungsstands eines Fahrzeugs, insbesondere des realen Fahrzeugs;
- zum Ermitteln zumindest eines Performanceindikators, z.B. KPI, des Systems des Fahrzeugs;
- zum Nachweis einer positiven Risikobilanz des Systems des Fahrzeugs, insbesondere für einen Rückschluss auf die erwartete Performance in Bezug auf reale Objekte;
- zum Betreiben eines weiteren Fahrzeugs;
- zum Trainieren eines neuronalen Netzes;
- zum Freischalten und/oder Sperren von Leistungsmerkmalen zumindest eines Fahrzeugs, insbesondere mit dem gleichen oder einem ähnlichen System des Fahrzeugs;
- zum Freischalten und/oder Sperren von (bestimmten) realen Reaktionen des Systems des Fahrzeugs auf reale, insbesondere mit dem zumindest einen virtuellen Objekt korrespondierende Objekte;
- zum Verändern einer digitalen Karte und/oder von Daten zur Interpretation einer digitalen Karte, insbesondere zur Freigabe und/oder Sperrung bestimmter Fahrbahnabschnitte für die Ausführung bestimmter Leistungsmerkmale, insbesondere bestimmter Reaktionen auf bestimmte reale Objekte bzw. auf bestimmte Parameter realer Objekte.

Dabei kann das Betreiben eines weiteren Fahrzeugs ein Betreiben des Systems des anderen Fahrzeugs mit Bezug auf reale Objekte, z.B. mit virtuellen Objekten korrespondierende Objekte, umfassen.

Beispielsweise kann ein Trainieren eines neuronalen Netzes mit einer Vielzahl der Reaktionsdaten (Sätze der Reaktionsdaten) erfolgen.

Die Daten des trainierten neuronalen Netzes des (oder eines ausgewählten) Entwicklungsstands können als Basis zum Betreiben eines, insbesondere mit dem Entwicklungsstand korrespondierenden, realen System eines Fahrzeugs verwendet werden. Insbesondere können dies Daten auf Basis eines Checkpoints, Gewichtsinformationen und/oder Bias-Terms des trainierten neuronalen Netzwerks sein.

Beispielsweise handelt es sich bei dem System des Fahrzeugs um ein Fahrerassistenzsystem oder um ein System zur Ausführung oder Unterstützung einer zumindest teilweise automatisierten Längsführung, Querführung und/oder Manöverausführung des Fahrzeugs, wie z.B. ein System zum zumindest teilweise automatisierten Fahren und/oder Parken.

Beispielsweise können auf Basis der Datenabschnitte, die einer realen Situation entsprechen, Reaktionsdaten des (originalen und/oder alternativen) Systems des Fahrzeugs ermittelt werden, die sich bei einer Veränderung bzw. einer Variante der Situation ergeben würden. Beispielsweise kann ermittelt werden, was hätte passieren können, wenn ein Verkehrsteilnehmer, z.B. ein Fußgänger, um einige Sekunden später reagiert hätte oder wenn plötzlich ein Fahrradfahrer aufgetaucht wäre.

Nachfolgend werden Merkmale der Erfindung anhand von weiteren Ausführungsbeispielen unter Bezugnahme auf die beigefügten Zeichnungen näher erläutert. Dabei sind die vorstehend oder nachfolgend in der Beschreibung genannten und/oder in den Zeichnungen alleine gezeigten Merkmale und Merkmalskombinationen nicht nur in der jeweils angegebenen Kombination, sondern auch in anderen Kombinationen oder in Alleinstellung verwendbar, ohne den Rahmen der Erfindung zu verlassen.
- Fig. 1(a): stellt schematisch und beispielhaft eine reale Fahrsituation in der Umgebung eines realen Fahrzeugs dar.
- Fig. 1(b): illustriert beispielhaft ein in die Umgebung des Fahrzeugs eingefügtes virtuelles Objekt.
- Fig. 1(c): illustriert eine beispielhafte Umgebung eines virtuellen Fahrzeugs.
- Fig. 2: zeigt schematisch und beispielhaft einen erfindungsgemäßen Verfahrensablauf.
- Fig. 3: zeigt schematisch und beispielhaft einen erfindungsgemäßen Verfahrensablauf.
- Fig. 4: veranschaulicht schematisch und bespielhaft das Betreiben eines Entwicklungsstands im Rahmen eines erfindungsgemäßen Verfahrens.

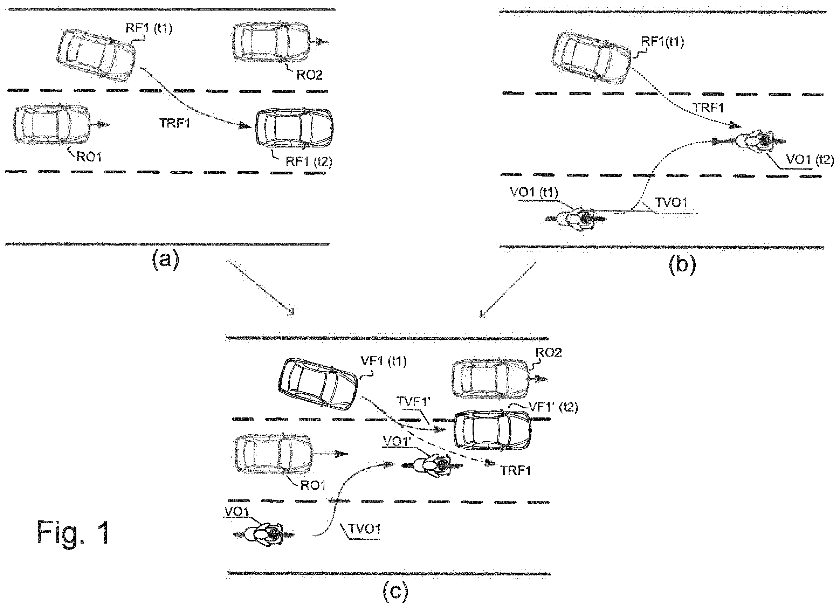

Figur 1(a) stellt eine reale Fahrsituation in der Umgebung eines realen Fahrzeugs RF1 dar. In der realen Umgebung des Fahrzeugs gibt es ferner zwei reale Objekte (ebenfalls Fahrzeuge) RO1, RO2.

Die Fahrsituation ist als eine dynamische Fahrsituation zu verstehen, welche sich z.B. über einen Zeitraum von 5 - 60 Sekunden erstrecken kann.

Dabei ist eine Trajektorie bzw. Bahnführungsplanung TRF1 des realen Fahrzeugs RF1 veranschaulicht. Diese repräsentiert die Bewegung des realen Fahrzeugs RF1 (sozusagen im Verlauf der Zeit bzw. der Fahrsituation) innerhalb der realen Umgebung.

Die Position des realen Fahrzeugs RF1 ist dabei symbolisch an zwei verschiedenen Zeitpunkten t1 und t2 dargestellt. Beispielsweise können erste Datenabschnitte DA1, DA2, DA3 eine derartige Fahrsituation repräsentieren. Die vorliegende Fahrsituation und/oder die ersten Datenabschnitte DA1, DA2, DA3 können die Parameter der Fahrsituation zu mehreren Zeitpunkten (z.B. mindestens 4, 8, 16, 64, .... Zeitpunkte, die zwischen t1 und t2 liegen) und/oder einen Verlauf der Parameterwerte (z.B. als eine Funktion nach der sich diese abhängig von der Zeit und/oder von der Fahrstrecke verändern) kennzeichnen.

Figur 1(b) veranschaulicht ein virtuelles Objekt VO1. Dabei ist eine (virtuelle) Trajektorie bzw. Bahnführungsplanung TVO1 des virtuellen Objekts VO1 veranschaulicht. Diese repräsentiert die (virtuelle) Bewegung des virtuellen Objekts VO1 innerhalb der Umgebung und/oder in Relation zum Fahrzeug RF1 zwischen den Zeitpunkten t1 und t2.

Das virtuelle Objekt VO1 kann ein simuliertes Objekt, wie z.B. (wie dargestellt) ein virtuelles Motorrad sein. Die in der Figur 1(b) dargestellte Trajektorie TVO1 des virtuellen Objekts VO1 kann durch entsprechende Datenabschnitte repräsentiert sein. Diese kann z.B. bereits in den Datenabschnitten repräsentierend das virtuelle Objekt VO1 repräsentiert, sozusagen hinterlegt oder bei einer Aktivierung des virtuellen Objekts VO1 ermittelt werden). Die Datenabschnitte werden bevorzugt in Relation zum Fahrzeug RF1, insbesondere im Koordinatensystem des Fahrzeugs RF1 und/oder abhängig von der Bewegung des Fahrzeugs RF1 ermittelt.

Das in der Figur 1(b) dargestellte Fahrzeug RF1 kann ebenso ein virtuelles Fahrzeug (oder ein "Platzhalter") sein, das sich an der Position des realen Fahrzeugs RF1 (z.B. zu unterschiedlichen Zeitpunkten t1, ..., t2) befindet. Die Positionen des virtuellen Objekts VO1 sind ebenfalls zu zwei verschiedenen Zeitpunkten t1 und t2 dargestellt.

Die Datenabschnitte, die das virtuelle Objekt VO1 und/oder seine Trajektorie TVO1 repräsentieren, können zum Modifizieren der ersten Datenabschnitte DA1, DA2, DA3 verwendet werden. Dabei werden zweite Datenabschnitte DA2 ermittelt (erzeugt).

Figur 1(c) illustriert eine beispielhafte (durch Daten repräsentierte bzw. gekennzeichnete) Umgebung eines Fahrzeugs VF1. Das Fahrzeug VF1 kann als ein virtuelles Fahrzeug aufgefasst werden. Dieses kann das reale Fahrzeugs RF1 (z.B. zu unterschiedlichen Zeitpunkten t1, ..., t2) repräsentieren. Die entsprechenden zweiten Datenabschnitte repräsentieren zumindest teilweise Merkmale, Objekte, der zumindest eine zugrundeliegende reale Fahrsituation (etwa gemäß Fig. 1(a)) sowie eines virtuellen Objekts VO1, seiner Trajektorie, etc. (etwa gemäß Fig. 1(b)).

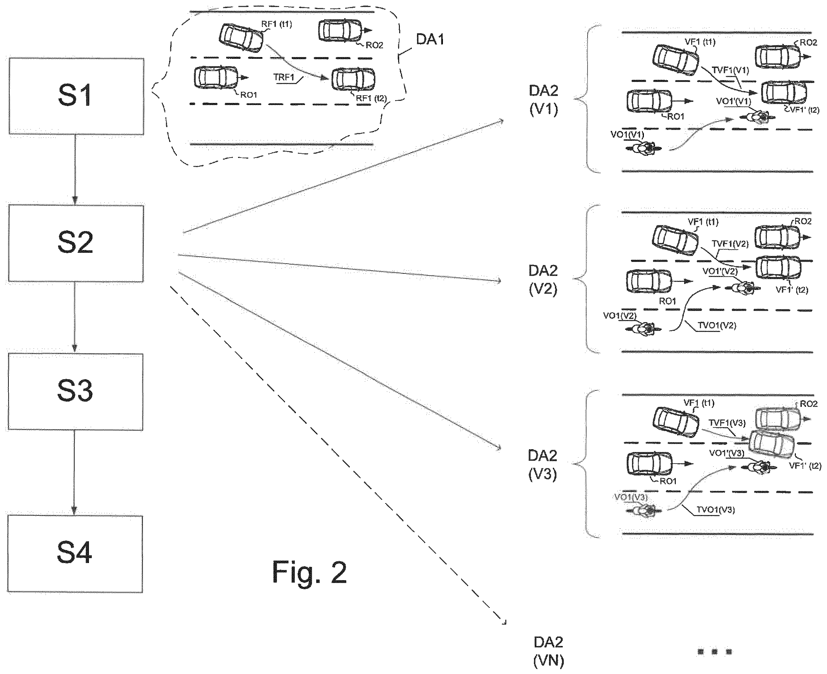

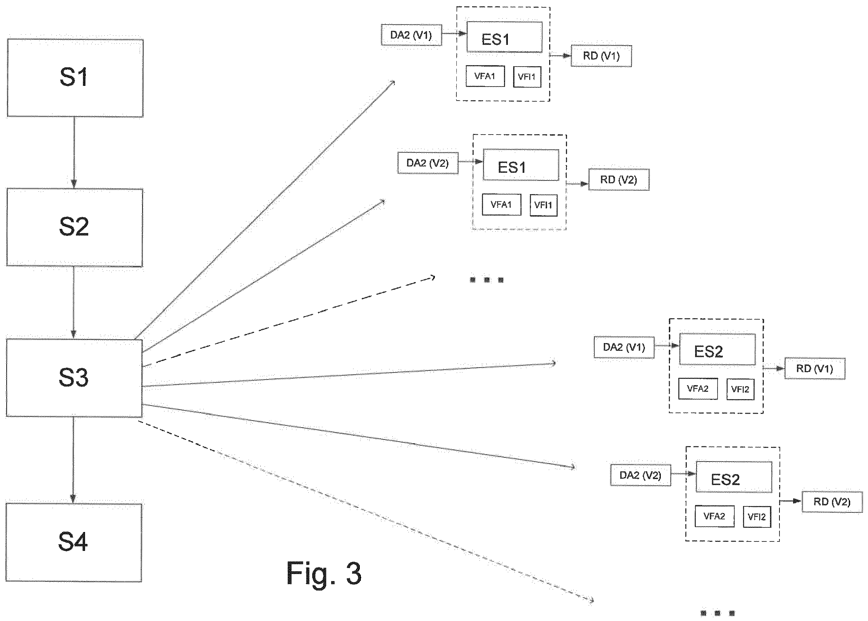

In der Fig. 2 und Fig. 3 wird ein beispielhafter Ablauf eines Verfahrens zum Entwickeln, Absichern, Trainieren und/oder Betreiben eines Entwicklungsstandes eines Fahrzeugsystems dargestellt.

Ein Schritt S1 umfasst das Ermitteln eines oder mehrerer ersten Datenabschnitte DA1, DA2, DA3 die eine reale Situation in der Umgebung eines realen Fahrzeugs RF1 repräsentieren. Bei dem vorliegenden Beispiel umfasst die reale Situation reale Objekte RO1, RO2.

Ein Schritt S2 umfasst das Modifizieren der ersten Datenabschnitte DA1, DA2, DA3 mit einem oder mehreren virtuellen Objekten VO1, ..., wobei zweite Datenabschnitte DA2(V1), DA2(V2), DA2(V3), ... ermittelt (auch zu verstehen "generiert") werden.

Ein Schritt S3 umfasst das Erzeugen von Reaktionsdaten RD(V1), RD(V2), RD(V3), ... einer Reaktion eines jeweiligen Entwicklungsstandes ES1, ES2, ES3 eines Fahrzeugsystems auf die zweiten Datenabschnitte DA2(V1), DA2(V2), DA2(V3), ....

Ein Schritt S4 umfasst das Verarbeiten und/oder Nutzen der Reaktionsdaten RD(V1), RD(V2, RD(V3), ... zum Entwickeln, Absichern, Trainieren und/oder Betreiben eines Entwicklungsstandes ES1, ES2, ES3 bzw. ES1', ES2', ES3' eines Fahrzeugsystems.

Zusätzlich wird in der Fig. 2 ein beispielhaftes Ergebnis des Modifizierens der ersten Datenabschnitte DA1, DA2, DA3 mit einem virtuellen Objekt VO1, ... dargestellt. Dabei wird eine Vielzahl der Sätze der zweiten Datenabschnitte DA2(V1), DA2(V2), DA2(V3), ... generiert. Diese repräsentieren jeweils eine Variante V1, V2, V3, ... einer Umgebung bzw. einer Fahrsituation.

Der Schritt S1 wird mittels eines oder mehrerer realen Fahrzeuge RF1, RF2, RF3, ... ausgeführt. Dabei werden abhängig von einer Trigger-Bedingung (z.B. abhängig vom Zutreffen der Trigger-Bedingung in dem jeweiligen Fahrzeug RF1) ein oder mehrere ersten Datenabschnitte DA1, DA2, DA3 ermittelt, die einen Teil der realen Situation, insbesondere Fahrsituation in der Umgebung des realen Fahrzeugs RF1 repräsentieren. Die eine oder mehrere Trigger-Bedingungen können sich auf Parameter, insbesondere Muster von Merkmalen bzw. von entsprechenden Parametern einer Fahrsituation beziehen. Es kann sich z.B. um ein oder mehrere Merkmale bzw. Parameter der Fahrsituation, die nachfolgend ausführlicher definiert sind, handeln.

Der Begriff erste Datenabschnitte DA1, DA2, DA3 ist insbesondere als ein Satz der ersten Datenabschnitte, z.B. repräsentierend einen Verlauf einer konkreten Fahrsituation, aufzufassen. Diese können jeweils unterschiedliche Arten von Daten zu einer Fahrsituation umfassen.

In dem Schritt S2 kann, z.B. auf Basis eines Datenabschnitts DA1, DA2, DA3 oder eines jeden Satzes der ersten Datenabschnitte DA1, DA2, DA3 eine Vielzahl von Varianten V1, V2, V3, ... VN der zweiten Datenabschnitte DA2(V1), DA2(V2), DA2(V3), ... generiert werden. Diese können durch Einfügen unterschiedlicher virtueller Objekte bzw. jeweils unterschiedliches Modifizieren erzeugt werden.

Das unterschiedliche Modifizieren kann z.B. ein Modifizieren mittels verschiedener virtuelle Objekte VO1, ... bzw. mittels virtueller Objekte VO1, ... auf Basis verschiedener Parameter (z.B. Bewegungsparameter, Verhalten, Modelle), und/oder durch das Generieren verschiedener Fahrsituationen mittels eines oder mehrerer virtueller Objekte VO1, ...

In dem Schritt S3 werden Reaktionsdaten RD(V1), RD(V2), RD(V3), ... zu je jeder generierten teilweise realen und teilweise virtuellen Umgebung oder Fahrsituation die jeweils durch einen Satz der zweiten Datenabschnitte DA2(V1), DA2(V2), DA2(V3) repräsentiert sind, erzeugt. Diese werden erzeugt, indem ein Entwicklungsstand ES1, ES2, ES3 ... mit den zweiten Datenabschnitten DA2(V1), DA2(V2), DA2(V3) (z.B. als Eingangsgröße bzw. Betriebsparameter) betrieben wird.

Bevorzugt wird eine Vielzahl der Reaktionsdaten RD(V1), RD(V2), RD(V3), ... auf Basis verschiedener Sätze der zweiten Datenabschnitte DA2(V1), DA2(V2), DA2(V3), ... erzeugt.

Es kann beispielsweise eine Vielzahl von Reaktionsdaten RD(V1), RD(V2), RD(V3), ... mittels eines Entwicklungsstands ES1, z.B. auf unterschiedlichen Prozessoren bzw. Prozessorkernen im Backend, erzeugt werden.

Dabei kann z.B. als der (erster) Entwicklungsstand ES1, ES2, ES3 bzw. (zweiter) Entwicklungsstand ES1', ES2', ES3' eine Vielzahl von zumindest im Wesentlichen bzw. prinzipiell gleichen und/oder im Wesentlichen nur durch Parameter unterschiedliche Entwicklungsstände ES1 verwendet werden. Diese können z.B. überwiegend Duplikate, Kopien bzw. gleichartige Emulationen sein, die bevorzugt auf parallel betriebenen Modulen, Prozessoren oder Prozessorkernen ausgeführt werden.

In einem weiteren, mit allen Merkmalen der Erfindung kombinierbaren Beispiel können mehrere, insbesondere wesentlich voneinander unterschiedliche Entwicklungsstände ES1, ES2, ES3 ... bzw. ES1, ES2, ES3 verwendet werden. Beispielsweise kann der Entwicklungsstand ES2 durch unterschiedliche Logik oder Parameter unterschiedlicher oder ein wesentlich bzw. prinzipiell anderer Entwicklungsstand als der Entwicklungsstand ES1 sein.

Bevorzugt werden die Reaktionsdaten RD1(V1), RD1(V2), RD1(V3), ... mit einem ersten Entwicklungsstand ES1 erzeugt und die Reaktionsdaten RD2(V1), RD2(V2), RD2(V3), ... mit zumindest einem zweiten Entwicklungsstand ES2 erzeugt. Der zweite Entwicklungsstand ES2 kann sich von dem ersten Entwicklungsstand ES1 qualitativ und/oder quantitativ unterscheiden. Dieser kann aber nur die nächste Stufe bei der Entwicklung des Fahrzeugsystems umfassen oder sein.

Unterschiedliche Entwicklungsstände ES2, ES3, ... können mehrere (nach einer bestimmten Abhängigkeit und/oder zumindest teilweise zufällig oder quasizufällig) gebildete Varianten eines Entwicklungsstands ES bzw. eines (etwa eine Gattung bildenden) Entwicklungsstands ES sein. Beispielsweise können auf Basis eines, z.B. bisher erfolgreichster, Entwicklungsstände ES1, ES2, ES3, weitere Entwicklungsstände ES1', ES2', ES3', ... entwickelt oder nach einer bestimmten Abhängigkeit gebildet werden.

Mit anderen Worten können (z.B. Tausende oder Millionen) der Reaktionsdaten (z.B. von Sätzen der Reaktionsdaten RD2(V1), RD2(V2), RD2(V3), ...) ermittelt werden, die eine jeweilige Reaktion eines Entwicklungsstands ES1, ES2, ES3, ES1', ES2', ES3' ... auf zumindest eine Variante der zweiten Datenabschnitte kennzeichnen. Diese können im Schritt S4 einer Weiterverarbeitung, insbesondere einem Abgleich, unterzogen werden. Dabei kann z.B. eine jeweils erreichte Performance und/oder eine resultierende Konsequenz ermittelt und verglichen werden.

Der Begriff "Fahrsituation" kann im Rahmen des vorliegenden Dokuments z.B. als eine bestimmte durch eine Anordnung, Aktion, oder Interaktion von Verkehrsteilnehmer oder durch bestimmte Fahrparameter von Verkehrsteilnehmern gekennzeichnete Situation verstanden werden.

Insbesondere unterscheidet sich die Bedeutung des Begriffs "Situation" bzw. "Fahrsituation" von einer häufig umgangssprachlich verwendeten Bedeutung des Begriffs "Verkehrssituation" welche vielmehr zusammenfassenden, allgemeinen Kategorien wie etwa "freier Verkehr", "dichter Verkehr", "zähfließender Verkehr", "Stau", "Stauende" etc. entspricht.

Insbesondere ist eine Fahrsituation (vielmehr) durch ein bestimmtes Muster (auch zu verstehen als ein Datenmuster), z.B. ein Muster kennzeichnend eine Anordnung und/oder Geschwindigkeit der Objekte und/oder ein Muster der Parameter der Fahrsituation, gekennzeichnet. Auch kann die Fahrsituation durch ein räumliches Muster der sogenannten Freiräume in der Umgebung des Fahrzeugs gekennzeichnet sein. Beispielsweise kann sich eine Trigger-Bedingung auf derartige Merkmale bzw. entsprechende Parameter der Fahrsituation beziehen.

Bevorzugt kann die zumindest eine Fahrsituation gekennzeichnet sein durch einen oder mehrere nachfolgend aufgezählte Merkmale:
- eine (bestimmte) räumliche Verteilung der Verkehrsteilnehmer und/oder der Bewegungsparameter der Verkehrsteilnehmer, insbesondere ein Anordnungsmuster der Verkehrsteilnehmer in der Umgebung des (realen) Fahrzeugs,
- eine (bestimmte) räumliche Verteilung unbeweglicher Objekte in der Umgebung des Fahrzeugs,
- eine relative Position und/oder Bewegungsparameter zu bestimmten Arten von Spurmarkierungen, Verkehrszeichen, Ampeln (nicht notwendigerweise zu bestimmten Ampeln, etc.),
- eine Information über die Vorfahrt des Fahrzeugs, insbesondere gegenüber bestimmten Verkehrsteilnehmern und/oder Verkehrsteilnehmern, die tatsächlich oder zumindest potentiell aus bestimmten Richtungen, z.B. einer querenden Straße von rechts oder von links kommen oder kommen können,
- eine Information zu einer, z.B. einen Grenzwert überschreitenden, Handlung eines Verkehrsteilnehmers in der Umgebung des Fahrzeugs, wie z.B. ein Hupen, Lichthupen, Drängeln, Überholen des Fahrzeugs, ein Überholversuch und dergleichen.

Ferner kann die Fahrsituation durch einen oder mehrere Parameter im Zusammenhang mit relevanten Verkehrsregeln, Verkehrszeichen, Vorfahrten, Ampeln und/oder Ampelphasen gekennzeichnet sein.

Bevorzugt kann es sich bei der zumindest einen Fahrsituation um eine bestimmte Grenzwerte überschreitende Fahrsituation bzw. um eine Fahrsituation, die durch bestimmte Grenzwerte überschreitende Parameter gekennzeichnet ist, handeln. Beispielsweise kann es sich bei der zumindest einen Fahrsituation um eine Fahrsituation mit einer unerwünschten bzw. gefährlichen Annäherung an ein Objekt oder einen Verkehrsteilnehmer, einen einen Grenzwert überschreitenden Beschleunigungswert, eine unterwünschte Anordnung zu weiteren Verkehrsteilnehmern etc. handeln.

Bei der Fahrsituation kann es sich um eine (z.B. vergleichsweise selten vorkommende) Sondersituation oder eine gefährliche Fahrsituation handeln, z.B. eine Fahrsituation, für die ein erhöhtes Risiko ermittelt oder angenommen wird. Derartige Fahrsituationen können mittels entsprechend definierter Trigger-Bedingungen (auch Parameter bzw. Kriterien der Trigger-Bedingungen) erkannt, insbesondere prädiziert werden. Daraufhin könne Datenabschnitte zum Erzeugen einer virtuellen Umgebung eines Fahrzeugs, insbesondere einer virtuellen Umgebung mit einem bestimmten Parameter bzw. einer virtuellen Umgebung einer bestimmten Art bzw. einer virtuellen Umgebung, die mit einem bestimmten Muster aus realen Fahrzeugen korrespondiert, ermittelt werden.

Figur 3 zeigt ein Beispiel des Ermittelns (auch zu verstehen als: Erzeugen) der Reaktionsdaten RD(V1), RD(V2), .... Die Figur 3 veranschaulicht den Schritt S3 im Detail.

Dabei werden eine Vielzahl der gleichen und/oder unterschiedlichen Entwicklungsstände ES1, ES2, .... betrieben. Diese werden mit (jeweils) einer Vielzahl von den zweiten Datenabschnitten DA2(V1), DA2(V2), ..., insbesondere mit Sätzen der zweiten Abschnitte, die eine Umgebung mit (jeweils) gleichen und/oder unterschiedlichen Fahrsituationen, z.B. gemäß Varianten V1, V2, V3, ... repräsentieren, betrieben.

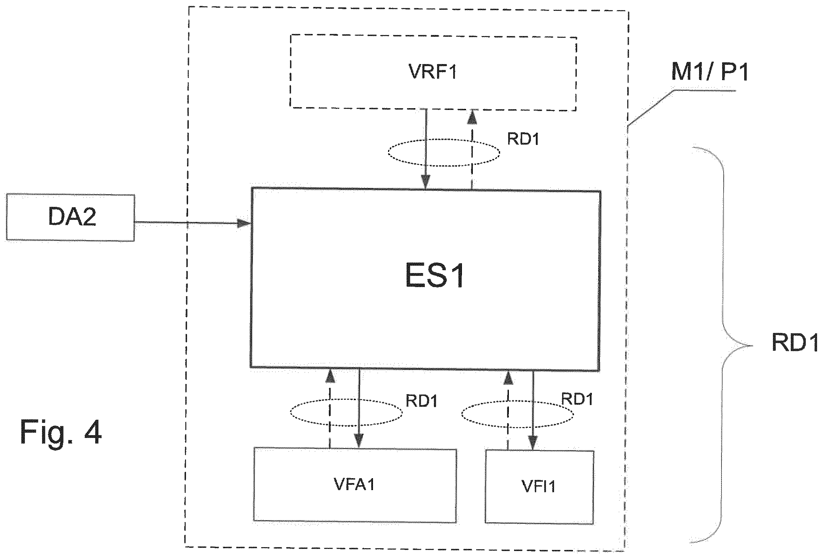

Figur 4 zeigt schematisch ein Beispiel des Betreibens eines Entwicklungsstands ES1.

Der Entwicklungsstand ES1 wird dabei (beispielweise ausschließlich) zum Ermitteln der Reaktionsdaten RD betrieben.

Der Entwicklungsstand ES1 kann ein System sein, welches mit dem System des realen Fahrzeugs RF1 korrespondiert, eine Emulation und/oder eine Weiterentwicklung zumindest eines wesentlichen Teils eines Systems des realen Fahrzeugs RF1 darstellt. Dieser kann die Grundlage für das nächste Fahrzeugsystem zur Verbau, Update, Upgrade bzw. Verwendung als das Fahrzeugsystem (zu verstehen auch: teil des Fahrzeugsystems) sein.

Der (stationär betriebene) Entwicklungsstand ES1 kann ein stationäres System bzw. ein Teil eines stationären Systems sein, welches mit einem System eines realen Fahrzeugs korrespondiert. Bei dem "korrespondierenden" System kann es sich um ein stationär betreibbares bzw. betriebenes System mit zumindest teilweise bzw. überwiegend derselben Hardware, derselben Software, denselben Schnittstellen, derselben Funktionalität, demselben bzw. ähnlichem (z.B. gleiche oder ähnliche Architektur aufweisenden) neuronalem Netz, etc. handeln. Es kann sich dabei um ein System handeln, welches zumindest teilweise das Fahrzeugsystem emuliert.

Der stationär betriebene Entwicklungsstand kann aber auch ein (z.B. ein sozusagen "im Trockenlauf") betriebener Teil des Fahrzeugs, insbesondere ein ganzes Fahrzeug sein. Mit anderen Worten kann gegenüber einer Vielzahl von (gleichen oder unterschiedlichen) Entwicklungsständen ES1, ES2, ES3, ... eine (jeweils unterschiedlich und/oder unterschiedlich stark) modifizierte Realität (aus einer oder mehreren realen Umgebungen) vorgespielt (sozusagen "vorgegaukelt") werden.

Der Entwicklungsstand ES1 selbst kann eine Signalverarbeitung, eine Funktionslogik, eine Steuerung, eine Regelung und/oder ein neuronales Netz umfassen. In einer bevorzugten Ausgestaltung korrespondiert dieser mit einem bestimmten (zum Einsatz in einem realen Fahrzeug geplanten) System bzw. mit entsprechenden Funktionalitäten, insbesondere mit einem zumindest teilweise automatisierten Fahren bzw. Parken. Der Entwicklungsstand ES1, ES2, ES3 ... kann ein zu trainierendes neuronales Netz umfassen.

Der eine oder die mehreren Entwicklungsstände ES1, ES2, ES3, ... müssen keine Bewegungen eines realen Fahrzeugs und keine Betätigung realer (physikalischer) Aktoren steuern. Beispielsweise kann der Entwicklungsstand z.B. lediglich eine Betätigung von ebenfalls stationär befindlichen und/oder durch ein Datenmodell nachgebildeten Aktoren veranlassen. Ferner kann eine automatisierte Auswertung und/oder Visualisierung der Betätigung der Aktoren und/oder eines entsprechenden Betriebs des Fahrzeugs ausgeführt werden.

Der Entwicklungsstand ES1 wird in diesem Beispiel mit den zweiten Datenabschnitten DA2 betrieben. Dabei werden die zweiten Datenabschnitte DA2, die zu einem Satz gehören und die z.B. jeweils eine Fahrsituation (z.B. eine Entwicklung oder Weiterentwicklung einer Fahrsituation innerhalb eines gewissen Zeitintervalls) repräsentieren, als eine oder mehrere Eingangsgrößen an den Entwicklungsstand ES1 bereitgestellt.

Der Entwicklungsstand ES1 wird ferner von virtuellen Daten VRF1, die stellvertretend für einen Teil eines realen Fahrzeugs oder des realen Fahrzeugs RF1 stehen, betrieben. Die Daten VRF1 können auf Basis der zusammen mit den ersten Datenabschnitten DA1, DA2, DA3 erfassten Datenabschnitte, von Betriebsdaten die für einen Betrieb des realen Fahrzeugs kennzeichnend sind und/oder von einem (mathematischen, rechnerischen) Modell (ggf. auch einer Simulation) des Teils des realen Fahrzeugs VRF1 ermittelt und dem Entwicklungsstand ES1 bereitgestellt werden.

Ferner können ein oder mehrere Aktoren des Fahrzeugs (auch zu verstehen als die gleichen oder ähnlichen Aktoren wie bei einem realen Fahrzeug RF1) vorgesehen sein, die von dem Entwicklungsstand ES1 betrieben (z.B. gesteuert oder geregelt) werden. Bevorzugt werden zumindest teilweise virtuelle bzw. virtualisiere Aktoren VFA1 verwendet. Diese können ein Modell eines realen Aktors, wie z.B. eines Aktors des Fahrwerks eines realen Fahrzeugs RF1, umfassen. Ferner kann bzw. können (wahlweise) auch ein oder mehrere reale (physische) Aktoren verwendet werden.

Zu den entsprechenden Reaktionsdaten RD1 können Daten gezählt werden, die ein Feedback des einen oder der mehrerer Aktoren VFA1 an den Entwicklungsstand ES1 und/oder einen Zustand bzw. eine Zustandsveränderung des einen oder der mehreren Aktoren VFA1 kennzeichnen.

Ferner kann von dem Entwicklungsstand ES1 eine Information VFI1, z.B. eine Fahrerinformation bzw. Daten zum Erzeugen einer Fahrerinformation, erzeugt werden. Eine derartige Information VFI1 kann ebenfalls zu den Reaktionsdaten RD1 gezählt werden. Die Information VFI1 kann ein Output des Entwicklungsstands ES1, wie z.B. eine Fahrerinformation, sein, die sich auf die in den zweiten Datenabschnitten DA2 repräsentierte Fahrsituation bezieht.

Mit anderen Worten kann die Information VFI kennzeichnend dafür sein, was ein reales Fahrzeugsystem in einem realen Fahrzeug in einer Fahrsituation, die von den zweiten Datenabschnitten repräsentiert ist, ausgeben würde. Auch diese Information kann zur Entwicklung, zur Absicherung, zum Trainieren und/oder zum Betreiben eines Fahrzeugsystems verwendet werden.

Zu den entsprechenden Reaktionsdaten RD1 können Daten gezählt werden, die der Entwicklungsstand ES1 an den (virtuell repräsentierten) Rest des Fahrzeugs ausgibt.

Eine oder mehrere der in der Figur 4 dargestellten Komponenten können ein (z.B. eines von einer Vielzahl) von Modulen bilden, die stationär (z.B. im Rahmen eines stationären Systems) betrieben werden können. Dabei kann der Entwicklungsstand ES1, ES2, ES3, ... jeweils auf einem Rechenmodul, Prozessor bzw. Prozessorkern ausführbar sein. Dabei kann eine besonders effektive Ausführung des Verfahrens erreicht werden.

Nachfolgend werden einige weitere untereinander und mit allen in diesem Dokument beschriebenen Markmalen kombinierbare Beispiele, insbesondere betreffend die Verwendung der Reaktionsdaten beschrieben.

### BEISPIEL (1)

Durch das unterschiedliche Modifizieren können zweite Datenabschnitte DA2(V1), DA2(V2), DA2(V3), ... ermittelt (erzeugt) werden, die unterschiedliche Varianten V1, V2, V3, ... einer Fahrsituation in der Umgebung (z.B. des Fahrzeugs VF1) repräsentieren. Dabei werden Varianten V1, V2, V3, ... gebildet, die quantitative und/oder qualitative Unterschiede zueinander aufweisen.

Ein quantitativer Unterschied kann z.B. eine Veränderung der Fahrsituation hinsichtlich ihrer Parameter sein oder umfassen. Ein qualitativer Unterschied kann ein Unterschied sein, bei dem ein prinzipiell unterschiedliches Ergebnis der Fahrsituation resultiert bzw. zu erwarten ist. Beispielsweise werden die Parameter des einen oder der mehreren virtuellen Objekte VO1, ... (z.B. schrittweise von einer Variante zu einer anderen Variante) verändert.

Beispielsweise kann bei der Verarbeitung der Reaktionsdaten RD1(V1), RD1(V2), RD1(V3), ... die Variante V1, V2, V3, ... einer Fahrsituation ermittelt werden, bei der (z.B. beinahe oder zum ersten Mal) ein prinzipiell anderes Ergebnis, insbesondere eine andere Konsequenz, resultiert. Beispielsweise können die Parameter der Fahrsituation ermittelt werden, bei der (bei einem Entwicklungsstand ES1, ES2, ES3 ...) eine bestimmte (z.B. hinreichende bzw. nicht hinreichende) Performance resultiert oder ein prinzipiell anderes Ergebnis resultiert. Ein qualitativ verändertes Ergebnis kann z.B. eine Entscheidung für ein prinzipiell anderes Manöver (z.B. Ausweichen anstatt Bremsen oder Bremsen anstatt auszuweichen) und/oder ein Eintritt einer anderen Konsequenz, wie z.B. einer Kollision, umfassen.

Beispielsweise kann ermittelt werden, bei welchen Parametern einer realen Fahrsituation im Falle eines realen Fahrzeugs ein prinzipiell verändertes Ergebnis zu erwarten ist (z.B. bei welchen Grenzparametern das Ergebnis der Fahrsituation sozusagen umschlägt), eine besonders stark oder prinzipiell veränderte Entscheidung (z.B. Manöverparameter) und/oder Konsequenz resultiert und/oder eine Toleranzgrenze eines bestimmten Entwicklungsstands in Bezug auf Parameter der Fahrsituation ermittelt werden.

### BEISPIEL (2)

Es werden mehrere Sätze von Reaktionsdaten RD1(V1), RD1(V2), RD1(V3), ... ermittelt, die die Reaktionen eines Entwicklungsstands ES1 auf eine Vielzahl der Varianten V1, V2, V3 des Modifizierens eines Satzes der ersten Datenabschnitte DA1, DA2, DA3 kennzeichnen.

Die Reaktionsdaten RD1(V1), RD1(V2), RD1(V3), ... auf Basis mehrerer Varianten der von den zweiten Datenabschnitten DA2(V1), DA2(V2), DA2(V2) repräsentierten Fahrsituation werden verarbeitet und/oder untereinander verglichen. Beispielsweise können abhängig von den Reaktionsdaten RD1(V1), RD1(V2), RD1(V3), ... Performanceindikatoren KPI1(V1), KPI1(V2), KPI1(V3), ... des Entwicklungsstands ES1 ermittelt werden, die bei unterschiedlichen Sätzen der zweiten Datenabschnitte DA2(V1), DA2(V2), DA2(V2) erreicht werden.

Die Performanceindikatoren KPI1(V1), KPI1(V2), KPI1(V3), ... und/oder das Ergebnis des Vergleichs der Performanceindikatoren KPI1(V1), KPI1(V2), KPI1(V3), ... können zur Entwicklung, zur Absicherung, zum Trainieren und/oder zum Betreiben eines Fahrzeugsystems verwendet werden.

### BEISPIEL (3)

Es werden mehrere Sätze von Reaktionsdaten RD2(V1), RD2(V1), RD2(V3), ... ermittelt, die die Reaktionen mehrerer Entwicklungsstände ES1, ES2, ES3, ... auf eine oder mehrere Varianten V1, V2, V3, ... des Modifizierens eines Satzes der ersten Datenabschnitte DA1, DA2, DA3 kennzeichnen.

Die Reaktionsdaten RD2(V1), RD2(V1), RD2(V3), ... können die Reaktionen unterschiedlicher Entwicklungsstände ES1, ES2, ES3, ... auf die gleiche Fahrsituation und/oder auf unterschiedliche Fahrsituationen kennzeichnen. Dies kann mit einem jeweils Satz der zweiten Datenabschnitte DA2(V1) DA2(V2), DA2(V3) erfolgen. Beispielsweise können abhängig von den Reaktionsdaten RD2(V1), RD2(V1), RD2(V3), ... Performanceindikatoren KPI1(V1), KPI2(V1), KPI2(V1), ... der Entwicklungsstände ES1, ES2, ES3, ... ermittelt werden. Diese können verarbeitet und/oder (z.B. nach einem vorausbestimmten Kriterium bzw. nach einer vorausbestimmten Formel) untereinander verglichen werden.

Die Performanceindikatoren KPI1(V1), KPI2(V1), KPI2(V1), ... und/oder das Ergebnis des Vergleichs der Performanceindikatoren KPI1(V1), KPI2(V1), KPI2(V1), ... bzw. von den Performanceindikatoren abhängiger Daten können zur Entwicklung, zur Absicherung, zum Trainieren und/oder zum Betreiben eines Fahrzeugsystems verwendet werden.

### BEISPIEL (4)

Es werden mehrere Sätze von Reaktionsdaten RD2(V1), RD2(V1), RD2(V3), ... ermittelt, die die Reaktionen mehrerer Entwicklungsstände ES1, ES2, ES3, ... auf mehrere Varianten des Modifizierens eines oder mehrerer Sätze der ersten Datenabschnitte DA1, DA2, DA3(V1), DA1, DA2, DA3(V2), DA1, DA2, DA3(V3) kennzeichnen.

Die Reaktionsdaten RD2(V1), RD2(V1), RD2(V3), ... können die Reaktionen unterschiedlicher Entwicklungsstände ES1, ES2, ES3, ... auf die gleiche Fahrsituation und/oder auf unterschiedliche Fahrsituationen kennzeichnen. Dies kann mit einem Satz der zweiten Datenabschnitte DA2(V1) oder mit mehreren Sätzen der zweiten Datenabschnitte DA2(V1), DA2(V2), DA2(V3), ... erfolgen. Beispielsweise können abhängig von den Reaktionsdaten RD2(V1), RD2(V1), RD2(V3), ... Performanceindikatoren KPI1(V1), KPI2(V1), KPI2(V1), ... der Entwicklungsstände ES1, ES2, ES3, ... ermittelt werden. Diese können verarbeitet und/oder (z.B. nach einem vorausbestimmten Kriterium bzw. nach einer vorausbestimmten Formel) untereinander verglichen werden.

Die Performanceindikatoren KPI1(V1), KPI2(V1), KPI2(V1), ... und/oder das Ergebnis des Vergleichs der Performanceindikatoren KPI1(V1), KPI2(V1), KPI2(V1), ... bzw. von den Performanceindikatoren abhängiger Daten können zur Entwicklung, zur Absicherung, zum Trainieren und/oder zum Betreiben eines Fahrzeugsystems verwendet werden.

Derartige Ergebnisse der Auswertung der Reaktionsdaten können ferner bei der Homologation von Fahrzeugen (z.B. auf Basis eines Entwicklungsstands ES1, ES2, ES3, ...), insbesondere von zumindest teilweise automatisiert fahrbaren Fahrzeugen berücksichtigt werden. Beispielsweise kann eine Homologation der Fahrzeuge zumindest teilweise basierend auf der Verarbeitung und/oder dem Vergleich der Reaktionsdaten erfolgen. Die Homologation, sowie eine Erfüllung oder ein Nachweis einer Betriebsauflage kann im Rahmen des vorliegenden Dokuments als ein Teil der Absicherung des Fahrzeugs betrachtet werden.

Ferner können die Daten auf Basis der Reaktionsdaten zum Trainieren eines neuronalen Netzes, verwendet werden. Diese Variante der Erfindung ist besonders vorteilhaft, weil im Rahmen des Verfahrens (auch gezielt) eine sehr große Menge an verwertbaren Daten zum Trainieren eines neuronalen Netzes erzeugt werden können.

Durch die Erfindung kann (z.B. hinsichtlich eines erforderlichen Aufwands, Risiken und/oder Zeit) eine Einsparung in der Größenordnung vieler Zehnerpotenzen generiert und/oder ein effizientes Entwickeln, Absichern, Trainieren, eine effiziente Homologation, eine effiziente Markteinführung sowie Weiterentwicklung von automatisiert fahrenden Fahrzeugen ermöglicht werden.

## Patentansprüche

1. Verfahren zum Entwickeln, Absichern, Trainieren und/oder Betreiben eines Fahrzeugsystems oder einer Fahrzeugfunktionalität umfassend:
- Erzeugen (S1, S2) von Datenabschnitten (DA2(V1), DA2(V2), DA2(V3)) repräsentierend ein oder mehrere virtuelle Objekte (VO1, VO1(V1), VO1(V2), VO1(V3)), die jeweils stellvertretend sind für eine oder mehrere bewegliche und/oder veränderliche Gegebenheiten; und
- Verarbeiten (S3, S4) der Datenabschnitte (DA2(V1), DA2(V2), DA2(V3)) repräsentierend das eine oder die mehreren virtuellen Objekte (VO1, VO1(V1), VO1(V2), VO1(V3)) oder abhängig von den Datenabschnitten (DA2(V1), DA2(V2), DA2(V3)) ermittelter Daten (RD(V1), RD(V2)) zum Entwickeln, Absichern und/oder Trainieren eines Entwicklungsstandes (ES1, ES2) des Fahrzeugsystems oder der Fahrzeugfunktionalität.

2. Verfahren nach dem Anspruch 1, wobei
die Datenabschnitte (DA2(V1), DA2(V2), DA2(V3)) repräsentierend zumindest ein virtuelles Objekt (VO1, VO1(V1), VO1(V2), V01(V3)) einen zeitlichen und/oder räumlichen Verlauf eines oder mehrerer Parameter des jeweiligen virtuellen Objekts (VO1, VO1(V1), VO1(V2), VO1(V3)) in Bezug auf eine weitere Gegebenheit (VF1, RO1, RO2) in der Umgebung des zumindest einen virtuellen Objekts (VO1, VO1(V1), VO1(V2), VO1(V3)) repräsentieren.

3. Verfahren nach dem Anspruch 1 oder 2, wobei
die Datenabschnitte (DA2(V1), DA2(V2), DA2(V3)) repräsentierend das zumindest eine virtuelle Objekt (VO1, VO1(V1), VO1(V2), VO1(V3)) eine Bewegung und/oder ein Verhalten des virtuellen Objekts (VO1, VO1(V1), VO1(V2), VO1(V3)), insbesondere in Bezug auf eine weitere Gegebenheit (VF1, RO1, RO2) in der Umgebung des virtuellen Objekts (VO1, VO1(V1), VO1(V2), VO1(V3)), repräsentieren.

4. Verfahren nach einem oder mehreren vorangegangenen Ansprüchen, wobei
das eine oder die mehreren virtuellen Objekte (VO1, VO1(V1), VO1(V2), V01(V3)) abhängig von Datenabschnitten repräsentierend eine Gegebenheit, die insbesondere jeweils einen zeitlichen und/oder räumlichen Verlauf eines oder mehrerer Parameter einer weiteren Gegebenheit (VF1, RO1, RO2) in der Umgebung umfassen können, variiert werden, derart, dass das eine oder die mehreren virtuellen Objekte (VO1, VO1(V1), VO1(V2), VO1(V3)) auf die Gegebenheit (VF1, RO1, RO2) reagieren, einwirken oder mit der Gegebenheit (VF1, RO1, RO2) interagieren.

5. Verfahren nach einem oder mehreren der vorangegangenen Ansprüche 2 bis 4, wobei es sich bei der zumindest einen weiteren Gegebenheit (VF1, RO1, RO2) um eine bewegliche und/oder veränderliche Gegebenheit (VF1, RO1, RO2) handelt, wobei insbesondere Datenabschnitte, die die zumindest eine weitere Gegebenheit (VF1, RO1, RO2) repräsentieren, gemäß einem mathematischen Zusammenhang veränderlich sind.

6. Verfahren nach einem oder mehreren vorangegangenen Ansprüchen 2 bis 5, wobei ein oder mehrere Parameter des einen oder der mehreren virtuellen Objekte (VO1, VO1(V1), VO1(V2), VO1(V3)), insbesondere kennzeichnend eine Bewegung, ein Verhalten und/oder eine Veränderung des zumindest einen virtuellen Objekts (VO1, VO2, VO3, ...) und/oder eine Rolle des zumindest einen virtuellen Objekts (VO1, VO1(V1), VO1(V2), VO1(V3)) innerhalb einer Fahrsituation, abhängig von einem Parameter der zumindest einen weiteren Gegebenheit (VF1, RO1, RO2) variiert wird.

7. Verfahren nach einem oder mehreren vorangegangenen Ansprüchen, wobei
ein oder mehrere Parameter des einen oder der mehreren virtuellen Objekte (VO1, VO1(V1), VO1(V2), VO1(V3)) und/oder ein oder mehrere Parameter der zumindest einen virtuellen Gegebenheit (VF1, RO1, RO2) gemäß einer Situationsbildungsvorschrift variiert werden.

8. Verfahren nach einem oder mehreren vorangegangenen Ansprüchen, wobei
das eine oder die mehreren virtuellen Objekte (VO1, VO1(V1), VO1(V2), VO1(V3)) und/oder die zumindest eine weitere Gegebenheit (VF1, RO1, RO2) eine Anordnung von Verkehrsteilnehmern, insbesondere einen dynamischen Ablauf einer Fahrsituation, repräsentieren.

9. Verfahren nach einem oder mehreren vorangegangenen Ansprüchen, umfassend:
- Erzeugen (S3) von Reaktionsdaten (RD(V1), RD(V2)), kennzeichnend eine Reaktion des Entwicklungsstandes (ES1, ES2) auf die Datenabschnitte (DA2(V1), DA2(V2), DA2(V3)), die das eine oder die mehreren virtuellen Objekte (VO1, VO1(V1), VO1(V2), VO1(V3)) repräsentieren, oder auf Daten, die abhängig von den Datenabschnitten (DA2(V1), DA2(V2), DA2(V3)) erzeugt sind;
- Verwenden (S4) der Reaktionsdaten (RD(V1), RD(V2)) zum Entwickeln, Absichern und/oder Trainieren des Entwicklungsstandes (ES1, ES2) und/oder zum Betreiben des Fahrzeugsystems auf Basis des Entwicklungsstandes (ES1, ES2).

10. Verfahren nach Anspruch 9, wobei
die Reaktionsdaten (RD(V1), RD(V2)) kennzeichnend sind für eine Reaktion eines ersten Entwicklungsstandes (ES1, ES2) auf eine Bewegung, ein Verhalten und/oder eine Veränderung eines oder mehrerer virtueller Objekte (VO1, VO1(V1), VO1(V2), VO1(V3))
und/oder
wobei die Reaktionsdaten (RD(V1), RD(V2)) kennzeichnend sind für eine Reaktion eines ersten Entwicklungsstandes (ES1, ES2) auf eine Bewegung, ein Verhalten und/oder eine Veränderung der einen oder mehreren weiteren Gegebenheiten (VF1, RO1, RO2).

11. Verfahren nach einem oder mehreren der vorangegangenen Ansprüche 9 oder 10, wobei eine Vielzahl von Sätzen der Reaktionsdaten (RD(V1), RD(V2)) eines Entwicklungsstandes (ES1, ES2) oder bevorzugt mehrerer Entwicklungsstände (ES1, ES2) in Reaktion auf (jeweils) einen oder mehrere Sätze:
der Datenabschnitte (DA2(V1), DA2(V2), DA2(V3)) repräsentierend das zumindest eine virtuelle Objekt (VO1, VO1(V1), VO1(V2), V01(V3));
und/oder
der Datenabschnitte (DA2(V1), DA2(V2), DA2(V3)) repräsentierend die eine oder die mehreren weiteren Gegebenheiten (VF1, RO1, RO2);
insbesondere zumindest teilweise gleichzeitig und/oder mittels einer Vielzahl von Prozessorkernen und/oder Prozessoren erzeugt werden.

12. Verfahren nach einem oder mehreren der vorangegangenen Ansprüche 9 bis 11, umfassend eine Verarbeitung einer Vielzahl von Sätzen der Reaktionsdaten (RD(V1), RD(V2)), die jeweils auf Basis einer Vielzahl unterschiedlicher Anordnungen, Bewegungen und/oder Verhalten des einen oder der mehreren virtuellen Objekte (VO1, VO1(V1), VO1(V2), VO1(V3)) erzeugt wurden, wobei das Ergebnis der Verarbeitung zum Entwickeln, Absichern, Trainieren und/oder Betreiben eines Fahrzeugsystems (ES1, ES2) verwendet wird.

13. Verfahren nach einem oder mehreren der vorangegangenen Ansprüche 9 bis 12, wobei auf Basis der Reaktionsdaten (RD(V1), RD(V2)) ein Maß einer Performance des Entwicklungsstands (ES1, ES2) und/oder ein Maß einer Empfindlichkeit des Entwicklungsstands (ES1, ES2) in Bezug auf eine Veränderung eines oder mehrerer Parameter des virtuellen Objekts (VO1, VO1(V1), VO1(V2), VO1(V3)) und/oder der weiteren Gegebenheit (VF1, RO1, RO2) ermittelt wird.

14. Verfahren nach einem oder mehreren der vorangegangenen Ansprüche 9 bis 13, wobei ein Abgleich von auf Basis einer Vielzahl von Sätzen der Reaktionsdaten (RD(V1), RD(V2)) ermittelten Daten und/oder jeweils erreichter Maße der Performance ausgeführt wird und das Ergebnis des Abgleichs zum Entwickeln, Absichern, Trainieren und/oder Betreiben des Entwicklungsstands (ES1, ES2) oder eines zweiten Entwicklungsstands (ES1, ES2) verwendet wird.

15. System zum Entwickeln, Absichern, Trainieren und/oder Betreiben eines Fahrzeugsystems oder einer Fahrzeugfunktionalität, wobei das System eingerichtet ist zum:
- Erzeugen (S1, S2) von Datenabschnitten (DA2(V1), DA2(V2), DA2(V3)) repräsentierend ein oder mehrere virtuelle Objekte (VO1, VO1(V1), VO1(V2), VO1(V3)), die jeweils stellvertretend sind für eine oder mehrere bewegliche und/oder veränderliche Gegebenheiten;
- Verarbeiten (S3, S4) der Datenabschnitte (DA2(V1), DA2(V2), DA2(V3)) repräsentierend das eine oder die mehreren virtuellen Objekte (VO1, VO1(V1), VO1(V2), VO1(V3)) oder abhängig von den Datenabschnitten (DA2(V1), DA2(V2), DA2(V3)) ermittelter Daten (RD(V1), RD(V2)) zum Entwickeln, Absichern und/oder Trainieren eines Entwicklungsstandes (ES1, ES2) des Fahrzeugsystems oder der Fahrzeugfunktionalität.
